# EUROPEAN PATENT APPLICATION

(11) **EP 4 506 311 A1**
(43) Date of publication of application: **12.02.2025**
(21) Application number: 23190011.9
(22) Date of filing: 07.08.2023
(51) Int. Cl.: C02F 1/469, B01D 61/44, B01D 61/52

(54) **ELECTRODIALYSIS DEVICE**

(71) Applicant: MEIKO Maschinenbau GmbH & Co. KG, 77652 Offenburg (DE)
(72) Inventor: van Linden, Niels, 3038 JE Rotterdam (NL); Schepers, Freek, 3743 EH Baarn (NL)
(74) Representative: Altmann Stößel Dick Patentanwälte PartG mbB

(57) **Abstract**

An electrodialysis device (110) configured for preparing at least one alkaline fluid and at least one acidic fluid from an aqueous medium comprising at least one salt by using bipolar membrane electrodialysis is disclosed. The electrodialysis device (110) comprises:
a. at least one fluidic stack (112) comprising:
- at least one acidic chamber (50i2) having at least one acidic outlet (522i2) for providing the acidic fluid;
- at least one alkaline chamber (SOil) having at least one alkaline outlet (512i1) for providing the alkaline fluid; and
- at least one bipolar membrane (42i) separating the acidic chamber (50i2) and the alkaline chamber (SOil), the bipolar membrane (42i) enabling bipolar ion exchange between the acidic chamber (50i2) and the alkaline chamber (SOil);

b. at least one cathode compartment (114) comprising at least one cathode electrode (118), the cathode compartment (114) being separated from the fluidic stack (112) by at least one membrane enabling ion exchange between the cathode compartment (114) and the fluidic stack (112); and
c. at least one anode compartment (116) comprising at least one anode electrode (126), the anode compartment (116) being separated from the fluidic stack (112) by the at least one membrane enabling ion exchange between the anode compartment (116) and the fluidic stack (112),
wherein the electrodialysis device (110) is configured for rinsing both the cathode compartment (114) and the anode compartment (116) with at least one rinsing fluid comprising at least one of the acidic fluid and the alkaline fluid.

## Description

### Technical Field

The present invention refers to an electrodialysis device configured for preparing at least one alkaline fluid and at least one acidic fluid from an aqueous medium comprising at least one salt by using bipolar membrane electrodialysis, a cleaning device for cleaning items, a method for preparing at least one alkaline fluid and at least one acidic fluid from an aqueous medium comprising at least one salt and to a process of cleaning items.

Cleaning devices of said kind may be used, for example, in restaurants, in facilities for catering, such as, in particular, office canteens, canteens in schools, public authorities, hospitals or care facilities. The cleaning device may be used, in particular, for cleaning items to be cleaned in the form of washware which is used directly or indirectly for preparing, storing or serving food and drinks. For example, the items to be cleaned may be dishes and/or trays. Other fields of use of the present invention are also feasible in principle, in particular fields of use with fundamentally any desired washware. Use in cleaning apparatuses and/or disinfection apparatuses for personal protection equipment is also possible, for example for cleaning respiratory masks. Other fields of use are also possible in principle.

### Background art

A plurality of different cleaning devices are known from the prior art for cleaning and/or disinfecting one or more items to be cleaned. The present invention relates, without restricting further possibilities or further fields of use, to the field of commercial washing technology, specifically to the field of commercial dishwashing technology. Therein, besides automatic programmed washers with static washing processes, conveyor washers or pass-through washer, in which the items to be cleaned are transported through one or more washing chambers, are known. The design of these washers depends on various boundary conditions, such as a type of items to be cleaned, a soiling, a throughput or similar conditions. By way of example, reference may be made to cleaning devices which are described, for example, in WO 2005/070276 A1 or in WO 2015/091750 A1. Further, the invention may be used in other sectors in principle. The invention may also be used in the field of cleaning personal protective equipment, for example as described in WO 2019/185809 A1. However, other fields of use are also feasible.

In cleaning devices known from the prior art, a plurality of cleaning chemicals may be used for the purpose of cleaning and/or disinfecting wash ware. Generally, a combination of alkali and complexing agents are used as cleaning chemicals. Additionally, cleaning chemicals often comprise bleaching agents and/or disinfectants. Typically, in commercial dishwashing machines, as an example, large amounts of sodium hydroxide solution are used. In most cases, the cleaning chemicals may be provided in liquid form to the cleaning devices. However, as cleaning chemicals are generally dangerous and/or hazardous substances, special handling, such as safe transportation and safe storage, of the cleaning chemicals is required. Supply of sodium hydroxide, as an example, in most countries, falls under the strict regulations of transport of hazardous materials. Further, operating staff of the cleaning devices has to be protected when handling hazardous substances, such as by wearing personal protective equipment. Further, hazardous substances generally need to be stored safely in a separate material store for hazardous substances. Moreover, these liquid cleaning substances are generally transported in containers for hazardous substances which are typically configured for single use. Thus, these containers may also require special treatment, specifically a separate disposal, which in turn requires additional transportation of empty hazardous material containers.

In order to avoid handling of hazardous liquid substances to and from cleaning devices, methods and devices are known which make use of solid cleaning chemicals, specifically with closed lockout packaging. For example, solid sodium hydroxide may be used as a cleaning chemical. Alternatively, metal silicate cleaners are frequently used as cleaning chemicals. However, cleaning chemicals in solid form, when based on sodium hydroxide, may still require above-mentioned special storage, transport, handling and disposal requirements. Furthermore, cleaning chemicals in solid form, when based on carbonates or silicates rather than on sodium hydroxide as alkaline source, may not provide the same cleaning efficiency as compared to liquid cleaning substances. Further, solid cleaning chemicals, specifically solid chemicals based on carbonates or silicates, are often prone to be deposited on the items to be cleaned and on components of the cleaning device, so residuals of the solid cleaning chemicals may remain on the washware. Additionally, for some solid cleaning chemicals, efficiency for cleaning the items to be cleaned may be lower, since this efficiency is dependent of a pH value of the cleaning chemicals. Moreover, solid cleaning chemicals generally remain hazardous substances which also require special handling and, thus, the risk for the operating staff as well as the requirements for hazardous substances regarding transport and storage remains.

Generally, cleaning devices configured for generating at least some of the cleaning chemicals *in situ* are known from the prior art. For example, DE 10 2013 219 204 A1 discloses a dishwasher which is embodied as a program machine or as a conveyor dishwasher. The dishwasher has at least one wash tank for receiving a treatment liquid and at least one rinsing system for providing a rinse liquid. In order to be able to avoid expensive cleaning chemicals, the dishwasher has a generator for generating treatment liquid with at least one electrolysis device, the generator being connected or connectable to the wash tank and is configured for providing an alkaline solution in the wash tank of the dishwasher by electrolysis.

EP 2 440 109 B1 describes a method for operating a conveyor dishwasher and a conveyor dishwasher for washing washware. The conveyor dishwasher has at least one pre-rinse zone with at least one pre-rinse nozzle for spraying pre-rinse liquid onto the washware, and at least one final rinse zone with at least one final rinse nozzle for spraying final rinse liquid onto the washware. At least some of the final rinse liquid which is sprayed in the final rinse zone is reused as pre-rinse liquid. The conveyor dishwasher further has a metering device which is associated with the final rinse zone being provided for adding a disinfectant to the final rinse liquid in a metered manner. In order to be able to avoid any possible hygiene safety risks in the case of chemical disinfection, the document additionally provides a metering device which is associated with the pre-rinse zone to be provided for adding a disinfectant to the pre-rinse liquid in a metered manner. A sensor device is also provided and is designed to detect the concentration of disinfectant in the pre-rinse liquid which is sprayed in the pre-rinse zone. A control device is also provided and is designed to actuate one of the metering devices as a function of the concentration of disinfectant which is detected by the sensor device in such a way that disinfectant is added in a metered manner.

JPH06-319673 A discloses a dishwasher capable of improving the washing effect against oil stains, reducing the detergent consumption, keeping dishes clean, and suppressing the occurrence of malodor. The dishwasher comprises injecting washing water from an injection nozzle to dishes to be cleaned in the dishwasher. The dishwasher provides an electrolytic tub electrolyzing the water fed from the outside to produce acid water and alkali ion water.

Further, in the field of chemical engineering such as in large chemical plants, various devices and apparatuses are known for manufacturing solid or liquid chemicals such as alkali materials. As an example, for manufacturing acidic or alkaline materials in chemical plants, electrolysis methods are generally known in the field of chemical engineering.

WO 2016/162327 A1 and FR 3 034 689 A1 describe an electrolytic cell for producing at least one chemical substance, in particular selected from dihydrogen, dioxygen, halides, in particular chlorine or bromine, acids, in particular hypochlorous acid HClO, the hypochlorite ion ClO⁻, hydrochloric acid HCl or bases, in particular sodium hydroxide NaOH, by electrolysis of an electrolyte, the electrolyte possibly being water containing at least one salt, one base and/or one acid, in particular selected from the following list: NaCl, KCl, MgCl₂, CaCl₂, CuSO₄, FeSO₄, NaNO₃, KNO₃, Na₂SO₄, K₂SO₄, Cd(CN)₂, Cu(CN)₂, Ag(CN), Zn(CN), CuCl₂, Cu(OH)₂, Ni(OH)₂, NiCl₂, ZnCl₂, ZnSO₄, Zn(OH)₂, Pb(NO₃)₂, CdCl₂, Cd(OH)₂, the electrolytic cell comprising: an anodic side chamber and an anode; a cathodic side chamber and a cathode; at least two ion exchange membranes positioned between the anode and the cathode; and at least one intermediate chamber arranged between the two ion exchange membranes, the intermediate chamber being fed with electrolyte by hydraulic inlet and outlet connectors positioned at the periphery of the cell, in particular being positioned on the same side of the cell or on either side thereof.

Further, WO 2012/129735 A1 and US 2014/0014145 A1 describe an electrolysis device for producing alkaline water from water including an electrolysis vessel, a positive electrode, a negative electrode, a bipolar membrane element, and at least one cation exchangeable membrane within the electrolysis vessel. The bipolar membrane element has a cation exchangeable side and an anion exchangeable side, the cation exchangeable side being closer to the negative electrode than the anion exchangeable side. The at least one cation exchangeable membrane is arranged between the anion exchangeable side of the bipolar membrane element and the positive electrode, so as to define an alkali chamber between the bipolar membrane element and the cation exchangeable membrane. An ionic exchange resin is associated with the vessel, whereby flow of the water though the vessel and the ionic exchange resin produces alkaline water in the alkali chamber. Various options and modifications are possible. A related washing machine such as a dishwasher is also disclosed.

US 4,536,269 A discloses an apparatus for generating an acidified aqueous salt solution and an aqueous base in a multichamber two-compartment electrodialytic water splitter which comprises alternating bipolar and first cation permselective membranes and at least one additional substantially non-porous, water-swollen cation permselective or neutral membrane disposed between a cation face of the bipolar membrane and a face of said first cation membrane thereby defining at least two acid compartments and a base compartment positioned between an anode and a cathode. The method comprises the steps of: (a) introducing a liquid comprising water to the base compartment; (b) introducing a liquid comprising an aqueous soluble salt to a first acid compartment adjacent the base compartment; (c) serially transferring the liquid comprising the aqueous soluble salt from the first acid compartment to a second acid compartment adj acent the first acid compartment; (d) passing direct current through said water splitter thereby adding hydrogen ions to the first and second acid compartments, metal cations from the acid compartments to the base compartment, and adding hydroxide ions to the liquid comprising water in the base compartment; (e) withdrawing a liquid comprising aqueous base from the base compartment; and (f) withdrawing an acidified aqueous soluble salt from the second acid compartment.

US 4,608,141 A describes a method of generating a basified aqueous salt solution and an aqueous acid in a multichamber two-compartment electrodialytic water splitter having unit cells comprised of a bipolar membrane, a first anion permselective membrane and at least one additional substantially non-porous, water-swollen non-cation permselective membrane disposed between an anion face of the bipolar membrane and a face of said first anion membrane thereby forming at least two base compartments and an acid compartment, positioned between an anode and a cathode. The method comprises the steps of: (a) introducing a liquid comprising water to an acid compartment formed by a cation face of a bipolar membrane and a face of said first anion membrane; (b) introducing a liquid comprising an aqueous soluble salt to a first base compartment formed by a face of said first anion membrane and a face of said at least one additional non-cation permselective membrane; (c) serially transferring the liquid comprising the aqueous soluble salt from said first base compartment to the additional base compartment formed by a face of said at least one additional non-cation permselective membrane and an anion face of a bipolar membrane; (d) passing direct current through said water splitter thereby adding hydroxyl ions to the additional base compartment, transferring hydroxyl ions through said at least one non-cation permselective membrane from the additional base compartment to the said first base compartment, anions from the first base compartments to the acid compartment, and adding hydrogen ions to the liquid comprising water in the acid compartment; (e) withdrawing a liquid comprising aqueous acid from the acid compartment; and (f) withdrawing a basified aqueous soluble salt from the additional base compartment.

US 5,135,626 A discloses a method of recovery of base from material comprising base or acid and salt. The method is conducted in an apparatus comprising a cation membrane between two bipolar membranes.

US 5,198,086 A discloses a method and related apparatus useful to electrodialytically convert the salt of a strong base and a weak acid to base with improved purity; or the salt of a weak base and a strong acid to acid with improved purity.

US 2019/0276940 A1 discloses an electro-chemical activation (ECA) system including an anode chamber, a cathode chamber, and a neutralization chamber. The anode chamber includes an anode configured to convert water having an alkaline-metal chloride into an anodic electrolyte that includes hypochlorous acid. The cathode chamber includes a cathode configured to convert water into a cathodic electrolyte. The neutralization chamber includes a neutralization cathode configured to remove protons from the anodic electrolyte after it leaves the anode chamber. The ECA system is configured to recirculate the anodic electrolyte back through the anode chamber and the neutralization chamber at least one more time to produce a concentrated chlorine solution. The ECA system is further configured to recirculate the cathodic electrolyte back through the cathode chamber at least one additional time to produce a concentrated alkaline solution.

N. Linden, G. L. Bandinu, D. A. Vermaas, H. Spanjers, and J. B. van Lier: "Bipolar membrane electrodialysis for energetically competitive ammonium removal and dissolved ammonia production", Journal of Cleaner Production 2020, volume 259, 120788, discloses a process using bipolar membrane electrodialysis to remove ammonium from water and to simultaneously produce concentrated dissolved ammonia, without using chemicals.

AT 399 721 B describes a process for obtaining citric acid. In the process, solutions of organic acids, such as solutions of organic acids produced by fermentation and possibly also containing other constituents such as biomass, oxalic acid, gluconic acid etc., are filtered, such as by overflow filtration, and then treated in several steps consisting of raising and lowering the pH and removing various constituents by means of electrodialysis. By using electrodialysis with bipolar membranes, the required chemicals for raising and lowering the pH are circulated. To improve the purity of citric acid, it is possible to employ selective cation or anion exchange membranes.

US 5,194,130 A describes a method and an apparatus of electodialytically treating an acid such as citric acid to produce a desired salt of the anion of the acid, such as sodium citrate.

A cation can be introduced into a solution via a cheap donor salt solution such as NaCl or KCl, without significantly altering or degrading the purity of the final product. The apparatus comprises a three-compartment cell, which comprises at least two adjacent anion selective membranes to accomplish a cation substitution reaction exploiting the differential selectivities of the adjacent anion membranes employed.

X. Tongwen and Y. Weihua describe in "Citric acid production by electrodialysis with bipolar membranes", Chemical Engineering and Processing 2002, volume 41, issue 6, pages 519 to 524, a production of citric acid from sodium citrate by means of electrodialysis, using bipolar membranes prepared from poly(phenylene oxide).

Despite the advantages achieved by the known method and devices, several technical challenges remain in the field of cleaning devices, specifically for dishwashing. These challenges generally refer to an efficient and safe supply of potentially hazardous chemical consumables to cleaning devices. Thus, specifically, in the field of commercial cleaning devices, liquid hazardous substances, such as highly alkaline liquid or solid substances, are still widely used as cleaning chemicals, despite of the many disadvantages involved, including transport, handling and discharge of waste water. Specifically, discharging waste water of high alkalinity may pose a technical challenge to waste water treatment downstream from the cleaning device. Further, methods and devices for generating liquid cleaning chemicals *in situ* from precursors also involve significant technical challenges. Specifically, it has to be assured that appropriate precursors and appropriate *in situ* processing methods are provided. Specifically, the precursors should be non-hazardous and desirably biologically degradable substances, specifically after use in the cleaning device. Further, the processing of the materials has to be performed in a manner avoiding hazardous by-products, such as avoiding generating corrosive, poisonous or explosive gases such as chlorine, chlorine compounds, hydrogen or other hazardous gases, solids or liquids. Furthermore, the precursors should generate an optimal mix of cleaning chemicals in the wash solution for optimal cleaning results and efficiency.

Thus, there remains a general need for safe and efficient methods of supplying hazardous chemical consumables to cleaning devices, specifically at large scale as required e.g. in commercial dishwashing machines. Further, there may be a need for a process that is robost with respect to frequent starts and stops of the cleaning device depending on incoming ware. Further, separate electrolyte rinse circuits, specifically with its own liquid circuit and pump and maintenance or service requirement for dishwashing are commonly problematic from a service and complexity point of view.

### Problem to be solved

It is therefore desirable to provide an electrodialysis device configured for preparing at least one alkaline fluid and at least one acidic fluid from an aqueous medium comprising at least one salt by using bipolar membrane electrodialysis, a cleaning device for cleaning items, a method for preparing at least one alkaline fluid and at least one acidic fluid from an aqueous medium comprising at least one salt and a process of cleaning items which at least largely address the above-mentioned technical challenges of known devices and methods. Specifically, an electrodialysis device configured for preparing at least one alkaline fluid and at least one acidic fluid from an aqueous medium comprising at least one salt by using bipolar membrane electrodialysis, a cleaning device for cleaning items, a method for preparing at least one alkaline fluid and at least one acidic fluid from an aqueous medium comprising at least one salt and a process of cleaning items shall be proposed which ensure a high level of hygiene while meeting high safety standards, specifically with respect to the safety of operating staff and environmental standards. Further, separate electrolyte rinse circuits, specifically with its own liquid circuit and pump and maintenance or service requirement, shall be avoided.

### Summary

This problem is addressed by an electrodialysis device configured for preparing at least one alkaline fluid and at least one acidic fluid from an aqueous medium comprising at least one salt by using bipolar membrane electrodialysis, a cleaning device for cleaning items, a method for preparing at least one alkaline fluid and at least one acidic fluid from an aqueous medium comprising at least one salt and a process of cleaning items with the features of the independent claims. Advantageous embodiments which might be realized in an isolated fashion or in any arbitrary combinations are listed in the dependent claims as well as throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect of the present invention, an electrodialysis device configured for preparing at least one alkaline fluid and at least one acidic fluid from an aqueous medium comprising at least one salt by using bipolar membrane electrodialysis is disclosed. The electrodialysis device comprises:
a. at least one fluidic stack comprising:
   - at least one acidic chamber having at least one acidic outlet for providing the acidic fluid;
   - at least one alkaline chamber having at least one alkaline outlet for providing the alkaline fluid; and
   - at least one bipolar membrane separating the acidic chamber and the alkaline chamber, the bipolar membrane enabling bipolar ion exchange between the acidic chamber and the alkaline chamber;
b. at least one cathode compartment comprising at least one cathode electrode, the cathode compartment being separated from the fluidic stack by at least one membrane enabling ion exchange between the cathode compartment and the fluidic stack; and
c. at least one anode compartment comprising at least one anode electrode, the anode compartment being separated from the fluidic stack by the at least one membrane enabling ion exchange between the anode compartment and the fluidic stack;

The electrodialysis device is configured for rinsing both the cathode compartment and the anode compartment with at least one rinsing fluid comprising at least one of the acidic fluid and the alkaline fluid, specifically the alkaline fluid. Specifically, the electrodialysis device may be configured for automatically rinsing both the cathode compartment and the anode compartment with at least one rinsing fluid comprising at least one of the acidic fluid and the alkaline fluid. The fluidic stack may be disposed in between the cathode compartment and the anode compartment.

In the following, further details on the electrodialysis device, specifically on the fluidic stack, the cathode compartment and the anode compartment, are given. For further details on the electrodialysis device, specifically on the fluidic stack, the cathode compartment and the anode compartment, reference may be made to EP 4 082 652 A1 and EP 4 082 974 A1.

The term "preparing" as used herein is a broad term and is to be given its ordinary and customary meaning to a person of ordinary skill in the art and is not to be limited to a special or customized meaning. The term specifically may refer, without limitation, to an action of producing, synthesizing, converting or transforming at least one reactant into at least one product. Specifically, the preparing may involve at least one conversion reaction, specifically at least one of an electrochemical reaction, a redox reaction, a water dissociation reaction and an acid-base reaction, converting the at least one reactant to the at least one product. The reactants of the preparing may comprise at least one of the aqueous medium comprising the at least one salt, specifically the solution of the at least one salt, more specifically one or more of a cation and an anion of the at least salt, and water, specifically ionized water comprising hydroxide ions and hydrogen cations.

The term "alkaline fluid" as used herein is a broad term and is to be given its ordinary and customary meaning to a person of ordinary skill in the art and is not to be limited to a special or customized meaning. The term specifically may refer, without limitation, to a fluid or a combination of fluids removed from an alkaline chamber of the electrodialysis device, as will be outlined in further detail below. The alkaline fluid may comprise at least one fluidic substance having a pH value greater than 7, such as pH>8, pH>10 or even pH>12. The pH-value of the fluid may be determined by common methods and devices, such by using colorimetric tests and/or a pH-meter and/or a conductivity sensor with a conductivity-pH calibration. These methods and devices are generally known to the skilled person. The alkaline fluid may be at least one of the cleaning fluids to be used in the cleaning device or, alternatively, may be added to at least one of the cleaning fluids. The alkaline fluid may specifically be a fluidic substance having a cleaning effect on the items to be cleaned. Specifically, the alkaline fluid may be or may comprise an aqueous medium, such as water, comprising sodium hydroxide. The alkaline fluid may be provided in the form of an aqueous stream comprising at least one alkali metal hydroxide MOH, specifically an aqueous stream comprising MOH produced in a process for simultaneously producing an aqueous stream comprising MOH and an aqueous stream comprising HA.

The term "acidic fluid" as used herein is a broad term and is to be given its ordinary and customary meaning to a person of ordinary skill in the art and is not to be limited to a special or customized meaning. The term specifically may refer, without limitation, to a fluid or a combination of fluids removed from an acidic chamber of the electrodialysis device, as will be outlined in further detail below. The acidic fluid may have a pH value of less than 7, e.g. pH<5 or pH<3, or may comprise at least one fluidic substance or component having a pH value of less than 7, e.g. pH<5 or pH<3. The pH value of the acidic fluid, over the duration of the process, may be constant or may change, e.g. decrease. Thus, the acidic fluid may be formed from a solution of at least one salt, wherein the solution may have a first pH value, wherein the acidic fluid may have at least one second pH value, wherein the second pH value is lower than the first pH value. In case a recirculation process is performed the pH value may decrease, e.g. from the first value to the second value. Notwithstanding the option of feeding that the salt solution or a part thereof to the fluid application device, the acidic fluid having a pH value of less than 7 may optionally be fed to the fluid application device.

However, besides at least one acid, the acidic fluid may comprise one or more further components. As outlined above, the pH-value of the fluidic substance may be determined by common methods and devices, such as by using colorimetric test and/or a pH-meter and/or a conductivity sensor with a conductivity-pH calibration. The acidic fluid may specifically be or may comprise an aqueous medium comprising at least one monobasic carboxylic acid and/or at least one polybasic carboxylic acid, specifically a dicarboxylic acid or a tricarboxylic acid or a mixture of a dicarboxylic acid and a tricarboxylic acid, more specifically citric acid. Specifically, polybasic carboxylic acids are known to be complex-forming agents. However, other acids are also feasible, such as one or more of methylglycinediacetic acid, also referred to as "acid of MGDA", L-Glutamic acid N,N-diacetic acid, also referred to as "acid of GLDA", iminodisuccinic acid, also referred to as "acid of IDS", lactic acid, oxalic acid, gluconic acid, sulphuric acid, polyacrylic acid, bicarboxylic acid and phosphoric acid. The acidic fluid may comprise, besides at least one of the above-mentioned acids, at least one further component, specifically the at least one salt, more specifically at least one of the cations and the anions of the at least one salt. The acidic fluid may be provided in the form of an aqueous stream comprising at least one Bronsted acid HA, specifically an aqueous stream comprising HA produced in a process for simultaneously producing an aqueous stream comprising MOH and an aqueous stream comprising HA.

The acidic fluid may be used in the cleaning device for various purposes. Thus, the acidic fluid may be used as the cleaning fluid and/or as one of the cleaning fluids in case more than one cleaning fluid are used in the device. Alternatively, the acidic fluid may be used as a component of the at least one cleaning fluid. Thus, the acidic fluid may be added to at least one of the cleaning fluids. Specifically, the acidic fluid may be added to at least one of the cleaning fluids for the purpose of at least one of washing, rinsing, disinfecting and/or decalcifying. For example, both the acidic fluid and the alkaline fluid may be added to the cleaning fluid for the purpose of washing. Specifically, by adding both the acidic fluid and the alkaline fluid to the cleaning fluid, it may be possible to use neutralized salts in the cleaning device for using the salt's calcium binding strength at high pH values of at least 7, more specifically of at least 10, which may specifically enhance cleaning power of the cleaning fluid.

The term "aqueous medium" as used herein is a broad term and is to be given its ordinary and customary meaning to a person of ordinary skill in the art and is not to be limited to a special or customized meaning. The term specifically may refer, without limitation, to a fluidic substance which at least partially comprises water. Specifically, the aqueous medium may refer to a fluid comprising a plurality of substances, wherein at least one of these substances is water. Alternatively, the aqueous medium may also refer to a single fluidic substance, wherein the single fluidic substance is water. The aqueous medium may be configured for incorporating one or more further substances, specifically for incorporating the at least one salt. Consequently, the term "aqueous medium comprising the at least one salt" may refer to an aqueous medium having incorporated the at least one salt. Specifically, the aqueous medium comprising the at least one salt may be or may comprise a solution of the at least one salt.

As used herein, the term "salt" may refer to a compound comprising at least one cation and at least one anion. The at least one salt may be solvable in the at least one aqueous medium, specifically in water. The salt may be dissociated upon solving in the aqueous medium such that the aqueous medium, specifically the solution of the at least one salt, may comprise the at least one cation and the at least one anion of the salt separated from each other. The at least one salt may comprise an alkali metal salt MA of a Bronsted acid HA. For example, the salt may be or may comprise a sodium salt of the polybasic carboxylic acid, specifically monosodium citrate or disodium citrate or trisodium citrate or a mixture of two or more thereof, preferably trisodium citrate. For example, the aqueous medium may comprise the salt of the polybasic carboxylic acid and, thus, the aqueous medium may comprise the cation of the salt of the polybasic carboxylic acid, specifically a sodium cation, and the anion of the salt of the polybasic carboxylic acid, specifically the polybasic carboxylic acid. However, other salts may also be feasible, such as one or more of methylglycinediacetic acid trisodium salt (MGDA), tetrasodium N,N-bis(carboxymethyl)-L-glutamate (GLDA), tetrasodium iminodisuccinate (IDS), sodium lactate, sodium oxalate, sodium gluconate, sodium sulphate, sodium carbonate, sodium polyacrylate and sodium tripolyphosphate. The aqueous medium comprising the at least one salt may comprise a mixture of two or more of the above-mentioned salts. For example, the aqueous medium comprising the at least one salt may comprise a mixture of MGDA and sodium citrate, specifically in a ratio of three parts sodium citrate per one part MGDA. As another example, the aqueous medium comprising the at least one salt may comprise a mixture of GLDA and sodium citrate, specifically in a ratio of three parts sodium citrate per one part GLDA. As another example, the aqueous medium comprising the at least one salt may comprise a mixture of IDS and sodium citrate, specifically in a ratio of three parts sodium citrate per one part IDS. The aqueous medium comprising the at least one salt, specifically the solution of the at least one salt, may comprise a ratio of the at least one salt and the aqueous medium in the range of from 10 to 50 weight-%, preferably in the range of from 15 to 35 weight-%, more preferably in the range of from 20 to 35 weight-%, more preferably in the range of from 25 to 35 weight-%, more preferably in the range of from 30 to 35 weight-%, based on the total weight of the aqueous medium comprising the at least one salt. By way of example, a ratio of 2, 10, 20 and 35 weight-% corresponds to a concentration of 20, 100, 200 and 540 g/L, respectively.

The term "bipolar membrane electrodialysis" as used herein is a broad term and is to be given its ordinary and customary meaning to a person of ordinary skill in the art and is not to be limited to a special or customized meaning. The term specifically may refer, without limitation, to a process of separating components of at least one electrolytic liquid, specifically of an aqueous medium and/or an aqueous solution of at least one salt, specifically for separating cations and anions of the at least one salt comprised by the aqueous medium, by using a combination of an electrical field and at least one membrane, the at least one membrane comprising at least one bipolar membrane (BPM) and optionally also at least one further membrane selected from the group consisting of a cation exchange membrane (CEM) and an anion exchange membrane (AEM). The membranes, specifically, may separate different compartments of an electrodialysis device, also referred to as a bipolar membrane electrodialysis device, and the electric field may be applied across the compartments and may drive both the separation of the ions and the permeation and/or transport of the ions at the respective membranes and/or through the respective membranes. The separation and transport of the ions induced by the applied electric field may yield an accumulation of cations in specific compartments of the electrodialysis device and anions in compartments being different from the compartment of accumulated cations. Specifically, cations may be transported through cation exchange membranes, whereas anions may be transported through anion exchange membranes. The separation of the cations and the anions of the at least one salt may specifically be driven by the electric field. Thus, the separation of ions may be driven electrically and specifically may be performed without applying any external fluidic pressure to the aqueous medium, specifically to the solution of the salt, or any other fluids, as opposed e.g. to other separation techniques such as reverse osmosis. Consequently, the electrodialysis device may constructively be designed for low-pressure applications, without the necessity of providing for a pump for the separation process. Further the separation of ions may be driven electrically, wherein an electric process may easily be controlled in accordance with the actual need of supply materials such as the alkaline fluid and/or the acidic fluid, so the separation process by the electrodialysis device may e.g. be implemented into an electric control scheme of the cleaning device.

Further, the bipolar membrane electrodialysis may comprise separating the cations and the anions of the at least one salt into at least two fluids, specifically into the alkaline fluid and into the acidic fluid. The at least two fluids may be comprised in the at least two compartments of the electrodialysis device and, thus, may be separated by the at least one membrane, specifically by the at least one at least one bipolar membrane (BPM) and optionally also at least one further membrane selected from the group consisting of a cation exchange membrane (CEM) and an anion exchange membrane (AEM). Additionally, the separations of ions may be independent of a concentration of cations and anions present in the electrolytic liquid. Thus, the separation of ions may specifically not be driven by an ionic concentration gradient between the at least two fluids.

As a consequence of the separation of ions, the bipolar membrane electrodialysis may further involve a conversion of the aqueous medium comprising the at least one salt, specifically of the solution of the at least one salt, into the at least one acidic fluid and a conversion of an additional aqueous medium, such as water, into the at least one alkaline fluid.

Specifically, the bipolar membrane electrodialysis may comprise at least two conversion reactions, wherein the two conversion reactions may be performed separate from each other in two different chambers of the electrodialysis device, the chambers being separated by at least one of the membranes as mentioned above. The bipolar membrane electrodialysis may comprise at least one first conversion reaction to form the at least one alkaline fluid, wherein the first conversion reaction may comprise an interaction of the cation of the at least one salt with at least one hydroxide ion, and at least one second conversion reaction to form the at least one acidic fluid, wherein the second conversion reaction may comprise an interaction of the anion of the at least one salt with at least one hydrogen cation. Thus, as an example, the following conversion reactions may be driven by the electric field:

M⁺ + OH⁻ ⇆ MOH

A⁻ + H⁺ ⇆ HA

Therein, M⁺ denotes the cation of the salt MA, OH⁻ denotes the hydroxide ion and MOH denotes the alkali metal hydroxide. Further, A⁻ denotes the anion of the salt MA, H⁺ denotes the hydrogen cation and HA denotes the acid HA. Although the cations and the anions in above-identified equations are denoted as being singly charged, it shall be noted, however, that the ions may also be multiply charged ions.

For example, the first conversion reaction may comprise an interaction of the cation of the sodium salt of the polybasic carboxylic acid with at least one hydroxide ion to form sodium hydroxide and the second conversion reaction may comprise an interaction of the anion of the sodium salt of the polybasic carboxylic acid with at least one hydrogen cation to form the polybasic carboxylic acid. The at least two conversion reactions may specifically be separated from each other by a bipolar membrane.

The term "bipolar membrane" as used herein is a broad term and is to be given its ordinary and customary meaning to a person of ordinary skill in the art and is not to be limited to a special or customized meaning. The term specifically may refer, without limitation, to a membrane layer setup, specifically a laminated layer setup, comprising at least one membrane layer that is only permeable for anions (anion exchange layer or anion exchange membrane) and at least one further membrane layer permeable only for cations (cation exchange layer or cation exchange membrane). The layers, as an example, may comprise polymer membrane layers. The layer permeable for anions only and the layer permeable for cations only may be in direct contact or may be linked via at least one intermediate layer. During bipolar membrane electrodialysis, an electrically driven separation of cations and anions typically takes place at the bipolar junction of the bipolar membrane, where the anion and the cation permeable layers are in direct contact, or at the interfaces between the cation exchange layer and the intermediate layer and between the anion exchange layer and the intermediate layer, respectively. Specifically, during bipolar membrane electrodialysis, the applied electric field may drive dissociation of water at the bipolar junction of the bipolar membranes. The water may dissociate in protons (H⁺) and in hydroxides (OH⁻) at the bipolar junction of the bipolar membrane. Thus, the cations permeating through the cation permeable layer of the bipolar membrane may comprise protons (H⁺), wherein the anions permeating through the anion permeable layer of the bipolar membrane may comprise hydroxide ions (OH⁻). This water dissociation process at the bipolar membrane may specifically be referred to as "bipolar ion exchange".

Specifically, the bipolar membrane may comprise at least one first layer allowing ions of one kind of charge to migrate through the first layer, and at least one second layer allowing ions of the other kind of charge to migrate through the second layer. Thus, the bipolar membrane may allow migration of ions of both kind of charges, wherein ions of one kind may migrate through the first layer in a first direction and ions of the other kind may migrate through the second layer in a second direction opposing the first direction. For example, the at least one first layer may comprise a cation exchange membrane, wherein the cation exchange membrane may allow migration of cations, specifically protons (H⁺), through the cation exchange membrane and may prevent migration of anions, and the at least one second layer may comprise an anion exchange membrane, wherein the anion exchange membrane may allow migration of anions, specifically hydroxide ions (OH⁻), through the anion exchange membrane and may prevent migration of cations. The at least one first layer, specifically the cation exchange membrane, may be arranged on a cathode side of the bipolar membrane and the at least one second layer, specifically the anion exchange membrane, may be arranged an anode side of the bipolar membrane.

The bipolar membrane may comprise, preferably may be, a bilayered membrane comprising an anion exchange membrane and a cation exchange membrane. The anion exchange membrane may preferably comprise, more preferably may be an anion exchange membrane as defined in context of the present invention. The cation exchange membrane may preferably comprise, more preferably may be a cation exchange membrane as defined in the context of the present invention.

The term "electrodialysis device", also referred to as a "bipolar membrane electrodialysis device", as used herein is a broad term and is to be given its ordinary and customary meaning to a person of ordinary skill in the art and is not to be limited to a special or customized meaning. The term specifically may refer, without limitation, to a device configured for performing the bipolar membrane electrodialysis. Thus, the electrodialysis device may comprise at least two electrodes for applying the electric field and at least one bipolar membrane disposed in between the electrodes, as well as, optionally, at least one further membrane selected from the group consisting of a cation exchange membrane and an anion exchange membrane. The membranes, specifically, may separate different compartments of the bipolar membrane electrodialysis device, and the electric field may be applicable, by the electrodes, across the compartments.

As outlined above, the electrodialysis device comprises the at least one fluidic stack. The term "fluidic stack" as used herein is a broad term and is to be given its ordinary and customary meaning to a person of ordinary skill in the art and is not to be limited to a special or customized meaning. The term specifically may refer, without limitation, to a device comprising a plurality or a sequence of neighboring fluid chambers wherein the fluid chambers are separated by at least one membrane, specifically at least one membrane selected from the group consisting of a cation exchange membrane, an anion exchange membrane and a bipolar membrane. Specifically, the fluidic stack may comprise at least one sequence of the acidic chamber and the alkaline chamber separated by the bipolar membrane. For example, the fluidic stack may comprise a plurality of acidic chambers and alkaline chambers, wherein the plurality of acidic chambers and alkaline chambers are arranged sequentially one after another. Each sequence of one acidic chamber, one alkaline chamber and one bipolar membrane may be separated by one cation exchange membrane. Additionally, each sequence of the fluidic stack may comprise at least one brine chamber separated from the acidic chamber by one anion exchange membrane. As outlined above, the fluidic stack may comprise a plurality or sequence of neighboring fluid chambers being separated by the at least one membrane. Thus, the fluidic stack may comprise a collection of membranes and fluid chambers, e.g. spacers. Thus, the fluidic stack may also be referred to as membrane stack.

As outlined above, the fluidic stack comprises the at least one acidic chamber having the at least one acidic outlet for providing the acidic fluid. The term "acidic chamber" as used herein is a broad term and is to be given its ordinary and customary meaning to a person of ordinary skill in the art and is not to be limited to a special or customized meaning. The term specifically may refer, without limitation, to a cavity or cell in the electrodialysis device which is walled by at least two membranes and which is configured such that, during bipolar membrane electrodialysis, the acidic fluid is formed in the acidic chamber. On a side of the acidic chamber facing an anode electrode of the electrodialysis device, a bipolar membrane may be provided. On a side facing a cathode electrode of the electrodialysis device, either an anion exchange membrane or a cation exchange membrane may be provided. Specifically, the at least one second conversion reaction of the bipolar membrane electrodialysis may take place in the acidic chamber of the fluidic stack.

The acidic chamber may be an open cavity, specifically comprising at least one acidic chamber inlet and the at least one acidic outlet, such that the aqueous medium comprising the at least one salt may be passed through the acidic chamber thereby being converted into the acidic fluid. The at least one acidic chamber inlet may also be referred to as "inlet means for passing an aqueous stream comprising an alkali metal salt MA of an acid HA into a cell". Consequently, the term "acidic outlet" as used herein, also referred to as "outlet means for removing an aqueous stream comprising HA from a cell", is a broad term and is to be given its ordinary and customary meaning to a person of ordinary skill in the art and is not to be limited to a special or customized meaning. The term specifically may refer, without limitation, to a device for removing a fluid, specifically the acidic fluid, from the acidic chamber.

As outlined above, the fluidic stack comprises the at least one alkaline chamber having the at least one alkaline outlet for providing the alkaline fluid. The term "alkaline chamber" as used herein is a broad term and is to be given its ordinary and customary meaning to a person of ordinary skill in the art and is not to be limited to a special or customized meaning. The term specifically may refer, without limitation, to a cavity or cell in the electrodialysis device which is walled by at least two membranes and which is configured such that, during bipolar membrane electrodialysis, the alkaline fluid is formed in the alkaline chamber. On a side of the alkaline chamber facing a cathode electrode of the electrodialysis device, a bipolar membrane may be provided. On a side facing an anode electrode of the electrodialysis device, specifically, a cation exchange membrane may be provided. Specifically, the at least one first conversion reaction of the bipolar membrane electrodialysis may take place in the alkaline chamber of the fluidic stack.

Further, the alkaline chamber may be an open cavity, specifically comprising at least one alkaline chamber inlet and the least one alkaline outlet, such that the aqueous medium may be passed through the alkaline chamber thereby being converted into the alkaline fluid. The at least one alkaline chamber inlet may also be referred to as "inlet means for passing an aqueous stream into a cell". Consequently, the term "alkaline outlet" as used herein, also referred to as "outlet means for removing an aqueous stream comprising MOH from a cell", is a broad term and is to be given its ordinary and customary meaning to a person of ordinary skill in the art and is not to be limited to a special or customized meaning. The term specifically may refer, without limitation, to a device for removing a fluid, specifically the alkaline fluid, from the alkaline chamber.

As outlined above, the electrodialysis device further comprises the at least one cathode compartment comprising the at least one cathode electrode, the cathode compartment being separated from the fluidic stack by the at least one membrane enabling ion exchange, e. g. migration or transport of ions, between the cathode compartment and the fluidic stack.

The term "cathode compartment" as used herein is a broad term and is to be given its ordinary and customary meaning to a person of ordinary skill in the art and is not to be limited to a special or customized meaning. The term specifically may refer, without limitation, to an element configured for holding or for accommodating the at least one cathode electrode. The cathode compartment may further comprise at least one cathode chamber, wherein the cathode chamber may comprise at least one cathode chamber inlet, also referred to as "inlet means for passing an aqueous electrolyte stream into the cathode chamber", and at least one cathode chamber outlet, also referred to as "outlet means for removing an aqueous electrolyte stream from the cathode chamber", for streaming an electrode rinsing fluid through the cathode chamber. The cathode electrode may specifically be arranged in the cathode chamber, so the cathode electrode specifically may be accommodated in a rising fluid, specifically an electrolyte fluid.

As used herein, the term "cathode electrode", also simply referred to as "cathode", is a broad term and is to be given its ordinary and customary meaning to a person of ordinary skill in the art and is not to be limited to a special or customized meaning. The term specifically may refer, without limitation, to an electrically conducting element, device or electrode which, when an electric voltage is applied thereto, attracts cations. The cathode electrode specifically may be the electrode to which, during bipolar membrane electrodialysis, a negative electric potential is applied. The cathode electrode may be in contact with the electrode rinsing fluid, specifically with a cathode rinsing fluid.

As outlined above, the cathode compartment is separated from the fluidic stack by the at least one membrane enabling ion exchange, e. g. migration or transport of ions, between the cathode compartment and the fluidic stack. Specifically, the membrane may be at least one of an ion exchange membrane and a bipolar membrane, more specifically at least one cation exchange membrane, enabling ion exchange, specifically an ion exchange involving unidirectional and/or bidirectional ion transport, specifically cation exchange, between the cathode compartment and the fluidic stack.

The term "cation exchange membrane" as used herein is a broad term and is to be given its ordinary and customary meaning to a person of ordinary skill in the art and is not to be limited to a special or customized meaning. The term specifically may refer, without limitation, to an ion-selective membrane allowing for permeation of at least one species of cations, whereas permeation of anions through the membrane is prevented. Specifically, a cation exchange membrane enabling ion exchange, specifically cation exchange, may allow ion transport, specifically cationic transport, through the membrane.

The cation exchange membrane, generally, may be an organic polymer-based cation exchange membrane comprising acidic functional groups, preferably strong acidic functional groups, more preferably sulfonic acid groups. The organic polymer may preferably comprise, more preferably may be one or more of a polyvinyl chloride polymer, a polystyrene polymer, a polyethylene polymer, a polysulfone polymer, a polyacrylate polymer, a polyamide polymer, and a polypropylene polymer. More preferably, the organic polymer may comprise, more preferably may be a polyvinyl chloride polymer.

As outlined above, the electrodialysis device further comprises the anode compartment comprising the at least one anode electrode, the anode compartment being separated from the fluidic stack by the at least one membrane enabling ion exchange, e. g. migration or transport of ions, between the anode compartment and the fluidic stack.

The term "anode compartment" as used herein is a broad term and is to be given its ordinary and customary meaning to a person of ordinary skill in the art and is not to be limited to a special or customized meaning. The term specifically may refer, without limitation, to an element configured for holding or accommodating the at least one anode electrode. The anode compartment may further comprise at least one anode chamber, wherein the anode chamber may comprise at least one anode chamber inlet, also referred to as "inlet means for passing an aqueous electrolyte stream into the anode chamber", and at least one anode chamber outlet, also referred to as "outlet means for removing an aqueous electrolyte stream from the anode chamber", for streaming the electrode rinsing fluid through the anode chamber.

The anode electrode may specifically be arranged in the anode chamber, so the anode electrode specifically may be accommodated in a rising fluid, specifically an electrolyte fluid.

As used herein, the term "anode electrode", also simply referred to as "anode", is a broad term and is to be given its ordinary and customary meaning to a person of ordinary skill in the art and is not to be limited to a special or customized meaning. The term specifically may refer, without limitation, to an electrically conducting element, device or electrode which, when an electric voltage is applied thereto, attracts anions. The anode electrode specifically may be the electrode to which, during bipolar membrane electrodialysis, a positive electric potential is applied. The anode electrode may be in contact with the electrode rinsing fluid, specifically in contact with an anode rinsing fluid.

As outlined above, the anode compartment is separated from the fluidic stack by the at least one membrane enabling ion exchange, e. g. migration or transport of ions, between the anode compartment and the fluidic stack. Specifically, the membrane may be at least one of an ion exchange membrane and a bipolar membrane, more specifically at least one cation exchange membrane, enabling ion exchange, specifically an ion exchange involving unidirectional and/or bidirectional ion transport, specifically cation exchange, between the anode compartment and the fluidic stack.

As outlined above, the electrodialysis device may be configured for automatically rinsing both the cathode compartment and the anode compartment with the at least one rinsing fluid comprising at least one of the acidic fluid and the alkaline fluid, specifically the alkaline fluid. Specifically, the electrodialysis device may be configured for rinsing firstly the anode compartment and secondly the cathode compartment.

The term "automatically" as used herein is a broad term and is to be given its ordinary and customary meaning to a person of ordinary skill in the art and is not to be limited to a special or customized meaning. The term specifically may refer, without limitation, to a process which is performed completely by means of at least one computer and/or computer network and/or machine, in particular without manual action and/or interaction with a user. Further, the term "automatically" may refer to the circumstance that a special pump and/or computer and/or other control means for the electrode rinse may not be needed. Instead, an already available fluid pump such as an alkaline fluid pump and control may be utilized. Thus, there may be no need for implementing additional controls and/or pumps over those already needed for the electrolyte rinse.

Specifically, both the cathode compartment and the anode compartment may be connected to at least one electrode rinse fluid path. The electrode rinse fluid path may be configured for rinsing both the cathode compartment and the anode compartment with the at least one rinsing fluid. The electrodialysis device may comprise at least one alkaline fluid path. The alkaline fluid path may be fluidically connected to the alkaline outlet and the alkaline inlet. Thus, the alkaline fluid path may be configured to run through the alkaline chamber. Further, the electrodialysis device may comprise at least one acidic fluid path. The acidic fluid path may be fluidically connected to the acidic outlet and the acidic inlet. Thus, the acidic fluid path may be configured to run through the acidic chamber. Specifically, the electrode rinse fluid path may be the alkaline fluid path or may be integrated in the alkaline fluid path. Thereby, specifically, the cathode compartment and the anode compartment may respectively be connected to the alkaline fluid path. Alternatively, the electrode rinse fluid path may be the acidic fluid path or may be integrated in the acidic fluid path. Thereby, specifically, the cathode compartment and the anode compartment may respectively be connected to the acidic fluid path. The term "fluid path" as used herein is a broad term and is to be given its ordinary and customary meaning to a person of ordinary skill in the art and is not to be limited to a special or customized meaning. The term specifically may refer, without limitation, to an arbitrary system configured for moving and/or transporting an arbitrary fluid from one destination to another destination. For this purpose, the fluid path may comprise one or more of pipelines or cannels. The term "electrode rinse fluid path" as used herein is a broad term and is to be given its ordinary and customary meaning to a person of ordinary skill in the art and is not to be limited to a special or customized meaning. The term specifically may refer, without limitation, to an arbitrary fluid path configured for rinsing at least one electrode such as a cathode or an anode. Specifically, the electrode rinse fluid path may be configured for rinsing at least one electrode compartment such as a cathode compartment or an anode compartment. The electrodialysis device may optionally further comprise at least one pump for providing a flow of the rinsing fluid through the electrode rinse fluid path. The term "pump" as used herein is a broad term and is to be given its ordinary and customary meaning to a person of ordinary skill in the art and is not to be limited to a special or customized meaning. The term specifically may refer, without limitation, to an arbitrary device which is configured for conveying a fluid medium. Specifically, the pump may be configured for providing volumetric flow or mass flow of a fluid medium and/or to provide a quantity of the fluid medium.

The cathode compartment and the anode compartment may be connected via the electrode rinse fluid path. Specifically, the anode compartment may have the at least one anode chamber outlet and the at least one anode chamber inlet. Further, the cathode compartment may have the at least one cathode chamber outlet and at least one cathode chamber inlet. Specifically, the anode compartment outlet may be connected to the cathode compartment inlet via the electrode rinse fluid path. However, also other embodiments may be possible. Thus, exemplarily, the anode chamber outlet may be connected to the cathode chamber inlet via the electrode rinse fluid path.

The electrodialysis device may comprise at least one alkaline device outlet fluidically connected to the alkaline outlet and at least one acidic device outlet fluidically connected to the acidic outlet. Specifically, the electrodialysis device may comprise a plurality of alkaline chambers each having an alkaline outlet. Thus, the electrodialysis device may comprise a plurality of alkaline outlets. The plurality of the alkaline chambers may be fluidically connected to the alkaline device outlet. Specifically, the plurality of the alkaline outlets may be fluidically connected to the alkaline device outlet. The alkaline device outlet may also be referred to as common alkaline outlet or as alkaline chamber outlet. Further, specifically, the electrodialysis device may comprise a plurality of acidic chambers each having an acidic outlet. Thus, the electrodialysis device may comprise a plurality of acidic outlets. The plurality of the acidic chambers may be fluidically connected to the acidic device outlet. Specifically, the plurality of the acidic outlets may be fluidically connected to the acidic device outlet. The acidic device outlet may also be referred to as common acidic outlet or as acidic chamber outlet. The at least one electrode rinse fluid path may specifically be at least one of: at least partially fluidically interconnected between the alkaline outlet and the alkaline device outlet; at least partially fluidically interconnected between the acidic outlet and the acidic device outlet. The electrode rinse fluid path may be fluidically connected to at least one of the acidic device outlet and the alkaline device outlet.

The electrodialysis device may specifically be configured according to one of the following:
- the alkaline outlet is fluidically connected to the electrode rinse fluid path and the electrode rinse fluid path is fluidically connected to the alkaline device outlet, such that the alkaline fluid generated by the alkaline chamber at least partially flows through the alkaline outlet into the electrode rinse fluid path, via the electrode rinse fluid path through at least one of the cathode compartment and the anode compartment, and through the alkaline device outlet;
- the acidic outlet is fluidically connected to the electrode rinse fluid path and wherein the electrode rinse fluid path is fluidically connected to the acidic device outlet, such that the acidic fluid generated by the acidic chamber at least partially flows through the acidic outlet into the electrode rinse fluid path, via the electrode rinse fluid path through at least one of the cathode compartment and the anode compartment, and through the acidic device outlet.

The electrode rinse fluid path may be configured such that at least one of the anode compartment and the cathode compartment are rinsed with the at least one rinsing fluid comprising at least one of the acidic fluid and the alkaline fluid. The electrode rinse fluid path may be configured such that the anode compartment and the cathode compartment are sequentially rinsed with the at least one rinsing fluid comprising at least one of the acidic fluid and the alkaline fluid. Specifically, the electrode rinse fluid path may be configured such that firstly the anode compartment and, secondly, the cathode compartment are sequentially rinsed with the at least one rinsing fluid comprising at least one of the acidic fluid and the alkaline fluid. However, also other embodiments may be feasible. Thus, specifically, the electrode rinse fluid path may be configured such that firstly the cathode compartment and, secondly, the anode compartment are sequentially rinsed with the at least one rinsing fluid comprising at least one of the acidic fluid and the alkaline fluid.

Specifically, the electrodialysis device may be configured such that the alkaline outlet is fluidically connected to the electrode rinse fluid path and the electrode rinse fluid path is fluidically connected to the alkaline device outlet, such that the alkaline fluid generated by the alkaline chamber at least partially flows through the alkaline outlet into the electrode rinse fluid path and via the electrode rinse fluid path sequentially firstly through at the anode compartment and, secondly, through the cathode compartment. Specifically, the anode compartment may have the anode chamber inlet and the alkaline device outlet may be fluidically connected to the anode chamber inlet via the electrode rinse fluid path. Further, the anode compartment may have the anode chamber outlet and the anode chamber outlet may be fluidically connected to the cathode chamber inlet via the electrode rinse fluid path.

Further, the electrode rinse fluid path may comprise at least one degassing device. The degassing device may comprise at least one of:
- a catalyst, specifically at least one hydrogen combustion catalyst, for catalyzing a redox reaction of gases produced in the anode compartment with gases produced in the cathode compartment, specifically of hydrogen and oxygen;
- a catalyst, specifically at least one hydrogen combustion catalyst, for catalyzing a redox reaction of gases produced in the cathode compartment with gases of an environment or surrounding of the degassing device;
- a sparking device;
- a frit; specifically a frit made of a porous ceramic material;
- a fan, specifically a fan for diluting a hydrogen level below an explosive level; and
- an open container, specifically an open container for degassing the electrode rinse fluid contained in the open container.

Alternatively or additionally, other options for removing hydrogen from the electrode rinse fluid path, such as a hydrogen fuel cell or a hydrogen storage tank, are also feasible. Thus, besides the option of simply removing the hydrogen, the hydrogen may be stored and/or used for other purposes, such as for energy storage and/or energy recuperation.

The catalyst may specifically comprise at least one platinum group metal, preferably one or more of platinum, rhodium and palladium, more preferably palladium. The platinum group metal may preferably be supported in an inert support material, preferably on an oxidic material comprising one or more of aluminum, titanium and silicon, more preferably aluminum, the oxidic material more preferably comprising alumina.

Further, the degassing device may comprise at least one sensor device, specifically at least one sensor device selected from the group consisting of a temperature sensor, a pressure sensor, a hydrogen sensor and an oxygen sensor. The sensor device may specifically be configured for monitoring the redox reaction. For example, the temperature sensor may be configured for monitoring a temperature in the degassing device, wherein the temperature may be indicative of the redox reaction taking place in the degassing device. Alternatively or additionally, the degassing device may comprise at least one hydrogen trap.

Specifically, the electrode rinse fluid path may comprise at least one anode degassing device disposed in the electrode rinse fluid path downstream the anode compartment and/or at least one cathode degassing device disposed in the electrode rinse fluid path downstream the cathode compartment. If there is a fault, an explosive mixture could be generated in the cathode compartment at the earliest and would then be removed directly by the cathode degassing device or discharged into a wash tank. If removed through the cathode degassing device, the hydrogen produced would be catalyzed, and if the explosive mixture was introduced into the wash tank, an air flow rate of the cleaning device would provide sufficient dilution. A malfunction of the cathode degassing device could be detected by one or more of the temperature sensors.

The electrodialysis device may further comprise at least one electrodialysis controller. The term "electrodialysis controller" also is a broad term and is to be given its ordinary and customary meaning to a person of ordinary skill in the art and is not to be limited to a special or customized meaning. The term specifically may refer, without limitation, to a device being embodied in one or several parts and configured for at least partially controlling and/or regulating at least one operating parameter of the electrodialysis device. Specifically, the electrodialysis controller may be configured for one or more of changing, controlling and regulating one or more operating parameter, such as electric current density, electric voltage, fluid velocity, pumping power, valve position or a combination thereof. The electrodialysis controller may specifically comprise at least one data processing unit, such as a processor. The electrodialysis controller may be configured, such as by hardware and/or by software programming, for performing and/or controlling operation of the electrodialysis device. Further, the electrodialysis controller may comprise at least one volatile or non-volatile data storage. The electrodialysis controller may comprise at least one interface, such as a human-device interface, configured for entering commands and/or for outputting information. The at least one interface may comprise a wired interface and/or a wireless interface for unidirectionally or bidirectionally exchanging data or commands, specifically between the electrodialysis controller and the electrodialysis device and/or between the electrodialaysis controller and at least one further device, such as a control device of the cleaning device. For example, the electrodialysis controller may comprise at least one computer and/or at least one processor.

The electrodialysis controller may be configured for controlling the preparing of the at least one alkaline fluid and the at least one acidic fluid, specifically by controlling an electric power provided to the electrodialysis device, more specifically by controlling an electric current density and/or an electric voltage applied to the cathode electrode and the anode electrode of the electrodialysis device. Thus, it may be possible to enhance or lower the preparation of the alkaline fluid and the acidic fluid by controlling the electric power provided to the electrodialysis device, specifically in accordance with an amount of the cleaning fluid required in the cleaning device.

Optionally, the fluidic stack may comprise at least one brine chamber. The brine chamber may be configured for receiving the aqueous medium comprising the at least one salt, specifically the solution of the at least one salt. Specifically, the brine chamber may comprise at least one brine chamber inlet for streaming fluid through the brine chamber. The brine chamber may have at least one brine outlet for providing the aqueous medium comprising the at least one salt, specifically the solution of the at least one salt. Thus, the brine chamber inlet may be configured for passing the stream of the aqueous medium comprising the at least one salt into the brine chamber. The brine outlet may be configured for removing a stream of the aqueous medium comprising the at least one salt from the brine chamber.

The fluidic stack may further comprise at least one anion exchange membrane separating the brine chamber and the acidic chamber. The anion exchange membrane may enable anion exchange between the brine chamber and the acidic chamber. Specifically, the anions of the at least one salt may be transported through the anion exchange membrane into the acidic chamber. An area of the anion exchange membrane may correspond to the electrode area of the cathode electrode and the anode electrode.

The electrode rinse fluid path may be fluidically connected to at least one of the acidic device outlet, the alkaline device outlet and the brine outlet.

In a further aspect of the present invention, a cleaning device for cleaning items is disclosed. The cleaning device comprises:
- at least one cleaning chamber for receiving the items;
- at least one fluid application device for applying at least one cleaning fluid to the items received in the cleaning chamber; and
- at least one electrodialysis device as described above or as will further be described below in more detail.

The cleaning device is configured for feeding at least a part of at least one of the alkaline fluid and the acidic fluid prepared by the electrodialysis device to the fluid application device.

In the following, further details on the cleaning device, specifically on the cleaning chamber, an on the fluid application device, are given. For further details on the cleaning device, specifically on the cleaning chamber, an on the fluid application device, reference may be made to EP 4 082 652 A1 and EP 4 082 974 A1.

The term "cleaning" as used herein is a broad term and is to be given its ordinary and customary meaning to a person of ordinary skill in the art and is not to be limited to a special or customized meaning. The term specifically may refer, without limitation, to a process in which macroscopic and/or microscopic contaminants and/or impurities are fully or partially removed from one or more items to be cleaned. Additionally, the cleaning may also comprise a full or partial disinfection, i.e. a full or partial removal of microbial contaminations from the items to be cleaned.

Consequently, the term "cleaning device" also is a broad term and is to be given its ordinary and customary meaning to a person of ordinary skill in the art and is not to be limited to a special or customized meaning. The term specifically may refer, without limitation, to an arbitrary device configured for performing at least one cleaning process as defined above. Since the advantages of the present invention specifically may relate to the on-demand supply of large amounts of consumables for use in the cleaning fluid of commercial dishwashers, the invention specifically will be described in the context of commercial dishwashers. Other cleaning devices, however, may also be used.

Further, the term "item" as used in the context of the cleaning, also referred to as "item to be cleaned" or "washware", also is a broad term and is to be given its ordinary and customary meaning to a person of ordinary skill in the art and is not to be limited to a special or customized meaning. The term specifically may refer, without limitation, to a basically arbitrary object which is cleanable by the cleaning device. Therein, a single item may be cleaned, or a plurality of items may be cleaned simultaneously or sequentially, as will be described in further detail below.

Specifically, and without limiting further options, the items to be cleaned may comprise one or more items which directly or indirectly, are configured or intended for preparing, storing or serving of food or beverages, such as tableware, tablets, pots, pans, glasses or the like. Further exemplary embodiments will be given below. Thus, as an example, the cleaning device specifically may be embodied as a dishwasher, more specifically a dishwasher configured for commercial use, such as a dishwasher, having one or more tanks for storing and/or preparing the at least one cleaning fluid. Commercial dishwashers or dishwashers for industrial use typically, are configured for use in catering facilities adapted for a large number of guests, such as cafeterias or restaurants. Dishwashers set up for commercial use or industrial use in many cases have two or more circuits for cleaning fluid, such as at least one washing circuit and at least one rinsing circuit for the separate preparation of rinsing fluid, for example with a boiler or flow heater. As will be outlined in further detail below, the cleaning device may comprise a single cleaning chamber or a plurality of cleaning chambers. The cleaning device, specifically the dishwasher, may, as an example, be configured as a program cleaning device or program dishwasher with stationary washing method, or as a conveyor cleaning device or a conveyor dishwasher or tunnel dishwasher, in which the items to be cleaned are conveyed by means of a conveyor device through one or multiple cleaning chambers. For possible embodiments of cleaning devices, specifically dishwashers, reference may be made e.g. to WO 2005/070276 A1 or WO 2015/091750 A1. The cleaning devices disclosed therein may also be used in the context of the present invention, with the modifications disclosed in further detail herein. It shall be noted, however, that other designs are also possible.

Additionally or alternatively, other items may be cleaned in the cleaning device. Further, additionally or alternatively, the items to be cleaned may comprise personal protective equipment (PPE), such as respirators, breathing masks, protective masks or other parts of personal protective equipment. For exemplary embodiments, reference may be made, e.g., to WO 2019/185809 A1. It shall be noted, however, that other cleaning devices and other items to be cleaned may also be possible. Exemplary embodiments will be given below.

The term "cleaning chamber" as used herein is a broad term and is to be given its ordinary and customary meaning to a person of ordinary skill in the art and is not to be limited to a special or customized meaning. The term specifically may refer, without limitation, to a chamber which is fully or partially closed and which is suited and/or configured for the cleaning process to be performed therein. The cleaning chamber specifically may comprise at least one housing, such as a housing comprising at least one of metal, plastic materials or a combination of materials, the housing fully or partially surrounding an interior of the cleaning chamber, in which the cleaning process may fully or partially be performed. The cleaning device may have a single cleaning chamber or may comprise a plurality of cleaning chambers, which, as an example, may be arranged in a sequential manner. The cleaning chamber, as an example, may comprise at least one opening for loading and unloading of items to be cleaned.

For example, the opening may comprise a door or a lid arranged at a front side of the cleaning chamber and/or at an upper side of the cleaning chamber. Alternatively, the opening may comprise a hood for closing the cleaning chamber, for example for hood-type cleaning devices, specifically for hood-type dishwashers. Further, the cleaning chamber may be fully or partially embodied as a tunnel cleaning chamber, specifically for conveyor cleaning devices, conveyor dishwashers or tunnel dishwashers. The tunnel cleaning chamber may specifically comprise at least one inlet opening and at least one outlet opening. However, other options are also feasible.

As outlined above, the cleaning device comprises the at least one fluid application device for applying the at least one cleaning fluid to the items received in the cleaning chamber. The term "cleaning fluid", also referred to as a "cleaning liquid", as used herein is a broad term and is to be given its ordinary and customary meaning to a person of ordinary skill in the art and is not to be limited to a special or customized meaning. The term specifically may refer, without limitation, to an arbitrary fluid, in particular a liquid, having a cleaning effect when impinging on the items to be cleaned. Specifically, the cleaning fluid may comprise an aqueous liquid, such as water and/or water comprising one or more additives, for example one or more cleaning concentrates and/or detergents and/or rinse aids and/or disinfectants. Further, the cleaning fluid may comprise one or more of the alkaline fluid and the acidic fluid, as will be outlined in further detail below. However, it may also be possible to feed at least a part of the aqueous medium comprising the at least one salt to the cleaning fluid.

The cleaning device may be configured for using a single cleaning fluid or a combination of different cleaning fluids. In case different cleaning fluids are used by the cleaning device, the cleaning fluids may be applied simultaneously or sequentially to the items to be cleaned. For example, the different cleaning fluids may be applied sequentially to the items remaining stationary within the cleaning device, specifically within the cleaning chamber. Alternatively, the different cleaning fluids may be applied to the items in different locations of the cleaning device, specifically in different cleaning chambers. For example, at least one first cleaning fluid may be applied to the items to be cleaned in a first cleaning chamber, followed by an application of at least one second cleaning fluid in a second cleaning chamber. Further cleaning fluids, such as a third cleaning fluid, a fourth cleaning fluid or even more cleaning fluids, may be applied in further cleaning chambers of the cleaning device. As an example, the cleaning fluid may comprise at least one first cleaning fluid for a purpose of washing and at least one second cleaning fluid for a purpose of rinsing. Examples will be given in further detail below.

The term "applying" as used in the context of "applying the cleaning fluid", also referred to as "application of the cleaning fluid", is a broad term and is to be given its ordinary and customary meaning to a person of ordinary skill in the art and is not to be limited to a special or customized meaning. The term specifically may refer, without limitation, to an arbitrary action of contacting the cleaning fluid to the items to be cleaned, in particular to a surface of the items to be cleaned. The application of the cleaning fluid to the items may comprise directly applying the cleaning fluid, such as by spraying, sprinkling, dripping, emitting a stream or any combination thereof and/or any other direct application of the cleaning fluid. Specifically, the cleaning fluid may be applied directly to the items to be cleaned such that the cleaning fluid contacts the items with a non-zero momentum. Alternatively or additionally, the application of the cleaning fluid may comprise indirectly applying the cleaning fluid to the items. For example, at least one part of the cleaning chamber may be fully or partially filled with the cleaning fluid such that the items received in this part of the cleaning chamber may be at least partially brought in contact with the cleaning fluid. However, other options for applying the cleaning fluid to the items or any combinations thereof are also feasible.

Applying the cleaning fluid to the items to be cleaned may specifically comprise applying such as by spraying or sprinkling, one or more of the alkaline fluid and/or the acidic fluid in a concentrated cleaning fluid, specifically not being diluted by one or more further fluids, such as water. The application of the concentrated cleaning fluid, specifically comprising the undiluted alkaline fluid and/or acidic fluid, may be followed by a time interval having the cleaning fluid applied to items to be cleaned and rinsing the cleaning fluid off the items to be cleaned. However, alternatively or additionally, applying the cleaning fluid may comprise applying a diluted cleaning fluid, specifically comprising one or more of the alkaline fluid and the acidic fluid diluted with one or more further fluids, to the items to be cleaned.

The application of the cleaning fluid may be performed in a single application mode in which the cleaning fluid may be applied once to the items to be cleaned. Alternatively or additionally, the application of the cleaning fluid may comprise a circulation application mode in which the cleaning fluid may be applied multiple times to the items. Such circulating modes and devices for circulating the cleaning fluid are known, for example, from conventional dishwashers and other washing devices. The circulation application mode may involve using a circulation pump configured for collecting cleaning fluid that was applied to the items and for applying this cleaning fluid once more to the items to be cleaned. A combination of the single application mode and the circulation application mode, specifically variable in order and repetition, may also be feasible. For example, in a first washing step, the cleaning fluid may be applied to the items using the circulation application mode, whereas in a second rinsing step, the cleaning fluid, specifically comprising a rinsing fluid, may be applied to the items using the single application mode.

The term "fluid application device" as used herein is a broad term and is to be given its ordinary and customary meaning to a person of ordinary skill in the art and is not to be limited to a special or customized meaning. The term specifically may refer, without limitation, to a device configured for applying the cleaning fluid to the items received in the cleaning chamber. The fluid application device may specifically comprise at least one nozzle system having at least one nozzle. Further, the fluid application device may comprise at least one pump and/or at least one piping system for providing the cleaning fluid to the nozzle system. As an example, the nozzle system and the piping system may be configured for applying the cleaning fluid from at least one fluid container to the items by using the at least one pump. Alternatively or additionally, the cleaning fluid may be directly provided to the nozzle system by at least one supply line, specifically without using a pump.

The cleaning device and the cleaning chamber may be configured for stationary cleaning, wherein the items to be cleaned remain stationary in the cleaning chamber and, as an example, are treated by subsequent cleaning steps of a cleaning program. Alternatively, as outlined above, the cleaning device may be configured as a conveying cleaning device, wherein the items to be cleaned are transported through the cleaning chamber. Thus, the cleaning chamber may comprise one or more cleaning compartments, wherein, for example, the items may remain stationary or may traverse the cleaning compartments sequentially.

As an example, the cleaning device may comprise one cleaning compartment, wherein the fluid application device may be configured for performing a process or program of cleaning items which will be described in further detail below, wherein the process may comprise a sequence of cleaning steps comprising applying one or more different cleaning fluids sequentially to the items received in the cleaning chamber, specifically in the one cleaning compartment. Alternatively, the items to be cleaned may be transported sequentially through one or more cleaning compartments of the cleaning chamber, wherein different cleaning fluids may be applied to the items using the fluid application device in the different cleaning compartments. For example, the cleaning compartments of the cleaning chamber may be selected from the group consisting of: a prewashing compartment; a washing compartment, wherein the washing compartment may be divided into at least one alkaline washing compartment, wherein in the alkaline washing compartment, the at least one alkaline fluid may be comprised by the cleaning fluid, and into at least one acidic washing compartment, wherein in the acidic washing compartment, the at least one acidic fluid may be comprised by the cleaning fluid; a rinsing compartment, wherein the rinsing compartment may be divided into one pump rinsing compartment and a subsequent fresh water rinsing compartment.

Further, at least one drying step may be provided, wherein the drying step, for example, may be performed in the cleaning chamber subsequent to the application of the cleaning fluid when the items are received stationary in one cleaning chamber or, as another example, may be performed in a drying compartment downstream the cleaning compartments of the cleaning chamber.

As outlined above, the cleaning device further comprises the at least one electrodialysis device as described above or as will further be described below in more detail.

As outlined above, the cleaning device is configured for feeding at least a part of at least one of the alkaline fluid and the acidic fluid prepared by the electrodialysis device to the fluid application device such as for use in the cleaning device.

The term "feeding" as used in the context of "feeding the alkaline fluid" or "feeding the acidic fluid", is a broad term and is to be given its ordinary and customary meaning to a person of ordinary skill in the art and is not to be limited to a special or customized meaning. The term specifically may refer, without limitation, to providing the alkaline fluid and/or the acidic fluid to the fluid application device. The feeding may comprise using at least one pump, specifically for a pressurized feeding of the alkaline fluid and/or the acidic fluid. Thus, the term "feeding" may comprise applying pressure to the alkaline fluid and/or the acidic fluid for transporting the alkaline fluid or the acidic fluid to the fluid application device. A pressure-less transportation, such as a transport effected by gravity, is also feasible. The providing of the alkaline fluid, as well as, optionally, also the providing of the acidic fluid, may be controlled by at least one controller of the cleaning device, so that the alkaline fluid or the acidic fluid, respectively, may be provided in accordance with the actual needs of a cleaning program run by the controller. The alkaline fluid and/or the acidic fluid may be transported from the at least one electrodialysis device to the fluid application device, specifically independently from each other. For example, feeding the alkaline fluid to the fluid application device may comprise directly transporting the alkaline fluid from the electrodialysis device to the fluid application device. Further, feeding the acidic fluid to the fluid application device may comprise indirectly transporting the alkaline fluid from the electrodialysis device to the fluid application device. For example, the acidic fluid may be stored temporarily in at least one container, specifically in at least one buffer container and/or at least one acid container. In this context, the term "feeding at least a part" is a broad term and is to be given its ordinary and customary meaning to a person of ordinary skill in the art and is not to be limited to a special or customized meaning. The term specifically may refer, without limitation, to a situation in which one part of a fluid, such as the alkaline fluid and/or the acidic fluid, is fed to a first component of the cleaning device, for example to the fluid application device, and the other part of the fluid is fed to a second component of the cleaning device, for example to one or more storage tanks for storing the fluid. However, the term may also refer to a situation in which all of the fluid, specifically all of the alkaline fluid and/or the acidic fluid prepared in the electrodialysis device, is fed to the respective component of the cleaning device.

The feeding of the acidic fluid may be at least partially separate from the feeding of the alkaline fluid. The separate feeding of the alkaline fluid and of the acidic fluid may comprise having at least two separate feeding lines, specifically at least one feeding line for the alkaline fluid and at least one feeding line for the acidic fluid, for guiding the respective fluid to the fluid application device. The alkaline fluid and the acidic fluid may be fed separately to at least one common washing tank of the fluid application or, alternatively or additionally, to different washing tanks of the fluid application device. As an example, the alkaline fluid and the acidic fluid may be fed to the common washing tank such that in the mixed cleaning fluid, a pH value of at least 10 and a free calcium concentration of below 1E-5 mol/liters is obtained. These conditions in the cleaning fluid may specifically enhance cleaning efficiency of the cleaning fluid. Alternatively or additionally, a part of the acidic fluid and a part of the alkaline fluid may be combined after removal from the electrodialysis device and may be fed in one common feeding line to the fluid application device.

Further, the cleaning device may comprise at least one control device for controlling an operation of the cleaning device. The term "control device" also is a broad term and is to be given its ordinary and customary meaning to a person of ordinary skill in the art and is not to be limited to a special or customized meaning. The term specifically may refer, without limitation, to a device being embodied in one or several parts and configured for at least partially controlling and/or regulating at least one operating parameter of the cleaning device. Specifically, the control device may be configured for one or more of changing, controlling and regulating one or more operating parameter, such as temperature, pressure, heating power, pumping power, valve position or a combination thereof. The control device may specifically comprise at least one data processing unit, such as a processor. The control device may be configured, such as by hardware and/or by software programming, for performing and/or controlling at least one cleaning process. Further, the control device may comprise at least one volatile or non-volatile data storage. The control device may comprise at least one interface, such as a human-device interface, configured for entering commands and/or for outputting information. The at least one interface may comprise a wired interface and/or a wireless interface for unidirectionally or bidirectionally exchanging data or commands, specifically between the cleaning device and at least one further device. For example, the control device may comprise at least one computer and/or at least one processor. The control device may be or may comprise a centralized control device and/or one or more decentralized control devices. The control device may be connected to one or more sensor device of the cleaning device and may be configured for processing one or more sensor signals received from the sensor devices.

The control device may be configured for controlling the feeding of the alkaline fluid to the fluid application device and optionally also for controlling the feeding of the acidic fluid to the fluid application device. The feeding of the alkaline fluid and/or the acidic fluid to the fluid application device may specifically be controlled independently from each other. For example, the control device may be configured for enabling the feeding of the alkaline fluid to the fluid application device, while the acidic fluid to the fluid application device is not fed to the fluid application device but is recirculated through the electrodialysis device. However, the control device may also be configured for controlling simultaneously feeding of both the alkaline fluid and the acidic fluid to the fluid application device. The control device may comprise at least one processor which may be configured, such as by software programming, for supporting controlling the operation of the cleaning device. The control device may be configured for controlling the use of the alkaline fluid and/or the acidic fluid in the cleaning device for one or more of the above-mentioned purposes.

The control device of the cleaning device and the electrodialysis controller may be separate devices, which, however, may be interconnected, e.g. by one or more wireless or wire bound control interfaces. Alternatively, however, the electrodialysis controller, may also fully or partially be integrated into the control device, or vice versa. Thus, as an example, the control device may be a machine controller of the cleaning device, and the electrodialysis controller may be a part of the machine controller.

The cleaning device may be configured for feeding at least part of the alkaline fluid to the fluid application device, specifically to at least one washing system of the fluid application device. Further, the cleaning device may be configured for feeding at least a part of the acidic fluid to the fluid application device.

Further, the cleaning device may be configured for using the acidic fluid for at least one purpose selected from the group consisting of:
- a washing process, wherein, in the washing process, both a part of the alkaline fluid and a part of the acidic fluid are applied to the items to be cleaned;
- an alkaline exposure process, wherein, in the alkaline exposure process, at least a part of the acidic fluid is directly applied to the items to be cleaned;
- an acidic exposure process, wherein, in the acidic exposure process, at least a part of the acidic fluid is directly applied to the items to be cleaned;
- a washing process, wherein, in the washing process, both a part of the alkaline fluid and a part of the acidic fluid are fed to at least one common washing tank of the fluid application device;
- a washing process, wherein, in the washing process, a part of the alkaline fluid and a part of the acidic fluid are fed to different washing tanks of the fluid application device;
- a rinsing process, wherein, in the rinsing process, a part of the acidic fluid is applied to the items to be cleaned; and
- a decalcifying process, wherein, in the decalcifying process, a part of the acidic fluid is applied to at least one of the fluid application device and the items to be cleaned, for decalcifying purposes; and
- a decalcifying process, wherein, in the decalcifying process, a part of the acidic fluid is applied to a feed stream of a reverse osmosis device comprised by the cleaning device.

Specifically, the plurality of partial process steps may be performed in a manner selected from the group consisting of:
- the items to be cleaned may remain stationary in the cleaning chamber, wherein the partial process steps may be performed sequentially in time;
- the items to be cleaned may be transported sequentially through the plurality of cleaning compartments of the cleaning chamber, the cleaning compartments may be configured for performing different partial process steps.

In a further aspect of the present invention, a method of preparing at least one alkaline fluid and at least one acidic fluid from an aqueous medium comprising at least one salt is disclosed.

The method comprises using the electrodialysis device as described above or as will further be described below in more detail.

The method further comprises rinsing, specifically automatically, both the cathode compartment and the anode compartment with at least one rinsing fluid comprising at least one of the acidic fluid and the alkaline fluid. For further details, reference is made to the description above.

In a further aspect of the present invention, a process of cleaning items is disclosed.

In the following, further details on the process of cleaning items are given. For further details on the process of cleaning items reference may be made to EP 4 082 974 A1.

The process comprises the following steps which specifically may be performed in the given order. It shall be noted, however, that a different order is also possible. Further, it is also possible to perform one or more of the process steps once or repeatedly. Further, it is possible to perform two or more of the process steps simultaneously or in a timely overlapping fashion. The process may comprise further steps which are not listed.

Specifically, in the process, the cleaning device according to the present invention, such as according to any one of the embodiments disclosed above and/or according to any one of the embodiments disclosed in further detail below, is used.

The process comprises:
i. receiving the items to be cleaned in the at least one cleaning chamber of the cleaning device;
ii. preparing the at least one alkaline fluid and at least one acidic fluid by using the electrodialysis device of the cleaning device; and
iii. feeding the at least one of the alkaline fluid and the acidic fluid to the at least one fluid application device of the cleaning device; and
iv. applying at least one cleaning fluid to the items received in the cleaning chamber by using the at least one fluid application device of the cleaning device.

In the process, step ii. may comprise passing a stream of the aqueous medium into the electrodialysis device, specifically via the at least one alkaline chamber inlet into the at least one alkaline chamber of the fluidic stack of the electrodialysis device, more specifically via at least one common alkaline inlet. Further, step ii. may comprise removing a stream of the at least one alkaline fluid from the electrodialysis device, specifically via the at least one alkaline outlet of the at least one alkaline chamber of the fluidic stack of the electrodialysis device, more specifically via at least one common alkaline outlet.

Further, the at least one alkaline fluid may comprise the aqueous medium, specifically water, comprising sodium hydroxide. Via the stream of the at least one alkaline fluid, sodium hydroxide may be obtained at a rate in the range of from 0.5 to 4 g/min, preferably in the range of from 1.5 to 3.75 g/min, more preferably in the range of from 2 to 3.5 g/min.

Further, step ii. may comprise passing a stream of the aqueous medium comprising the at least one salt, specifically the solution of the at least one salt, into the electrodialysis device, specifically via the at least one alkaline inlet into the at least one alkaline chamber of the fluidic stack of the electrodialysis device, more specifically via at least one common alkaline inlet. Additionally, step ii. may comprise sequentially rinsing the anode compartment and the cathode compartment with the alkaline fluid via the electrode rinse fluid path.

The process may further comprise a salt supply monitoring. The salt supply monitoring may comprise at least one of a monitoring of a salt supply for preparing the aqueous medium and a monitoring of the aqueous medium itself. The salt supply monitoring may be performable via at least one of a conductivity sensor, a pH sensor, a filling level sensor, a density sensor, a spectral camera, a turbidity sensor. Also other devices may be feasible.

In step ii. the at least one rinsing fluid may be provided by the alkaline outlet of the alkaline chamber or by the acidic outlet of the acidic chamber.

At least one of steps ii. to iv. may be automatically stopped in case the salt supply monitoring detects an insufficient salt supply, specifically a salt supply below at least one predetermined supply limit. The term "insufficient salt supply" may generally refer to a salt supply which is below a certain supply limit such that a desired purpose cannot be fulfilled with the salt supply. The term "predetermined" may generally refer to a property of being determined, stated or fixed before a certain event occurs or is introduced. The process may further comprise generating a salt replenishing signal in case the salt supply monitoring detects an insufficient salt supply. The process may further comprise automatically restarting the at least one stopped step in case the salt supply monitoring detects the sufficient replenishing of the salt supply.

Further, at least one of steps ii. to iv. may be automatically stopped after a certain time interval such as, exemplarily, once a day. Thereafter, the at least one of steps ii. to iv. may be automatically restarted after a certain further time interval such as, exemplarily, after 15 min.

The process of cleaning items according to the present invention may refer to a process wherein relatively frequently at least one of steps ii. to iv. may be stopped and restarted. Thus, initially, water may flow through at least one of the alkaline chamber or of the acidic chamber relatively often.

The methods and devices according to the present invention provide a large number of advantages over known methods and devices of similar kind.

Specifically, a small device may be provided with fewer pumps and controls and which may require less maintenance. Specifically, NaOH may be used as electrode rinsing fluid. Further, specifically, the electrodialysis device may be applied in a cleaning device which may specifically be a dishwasher. Typically, the dishwasher may be stopped and restarted several times a day. Firstly, water may be flushed through the alkaline chamber and alkaline fluid may be produced. The alkaline fluid may rinse the anode compartment and the cathode compartment. A delay in reaching a maximal concentrated alkaline fluid after stopping and restarting the elecotrodialysis device may be fully mitigated by a longer dosing time of the alkaline fluid such as NaOH through conductivity.

A electrolysis circuit between the anode and cathode of the electrodialysis device was redesigned. Thus, a self-generated brine solution may be used as electrolysis liquid. Compared a system with a separate electrolysis circuit, a pump may be omitted and a filling of the electrolysis circuit may be fully automatic. The self-generated brine solution may be transported first to the anode compartment, but also first to the cathode compartment. In case the self-generated brine solution may be transported first to the anode compartment no explosive mixture or oxyhydrogen gas can collect in the fluidic stack in the event of a degassing fault.

If there is a fault, an explosive mixture could be generated in the cathode compartment at the earliest and would then be removed directly by the degassing unit or discharged into the wash tank. If removed through the degassing unit, the hydrogen produced would be catalyzed, and if the explosive mixture was introduced into the wash tank, an air flow rate of the cleaning device would provide sufficient dilution. A malfunction of the degassing unit could be detected by temperature sensors.

A catalyst of the degassing device may not be required during fault-free operation; the catalyst may be intended solely as a safety mechanism in the event of a fault. If hydrogen were to accumulate within the fluidic stack, the hydrogen could diffuse through the membranes of the fluidic stack and thus also reach the anode. If this fault condition occurs, the temperature of the catalyst would increase and temperature sensors would detect this temperature change. Hydrogen may diffuse through the membranes and may also reach the other electrode via the electrode rinsing. As described, there may also be a catalyst there, which would heat up on contact with hydrogen. Specifically, the second catalyst may also comprise a temperature sensor. By redesigning the electrolysis circuit, fewer microbubbles may occur at the test bench of the fluidic stack and the resulting gas bubbles may be generally somewhat larger, allowing for better/safer degassing. In addition, by using the brine solution as the electrolysis liquid, micro bacterial growth in the electrolysis circuit is commonly no longer possible, since on the one hand the pH value of the brine solution may prevent this and on the other hand the electrolysis circuit may be constantly renewed or emptied in the wash tank of the cleaning device.

Parameters of the electrode fluid rinse path according to the present invention such as the filling level do advantageously not necessarily have to be monitored. Further, the electrode fluid rinse path according to the present invention does not have to be refilled. To the contrary , in a closed loop, a filling level may decrease due to osmotic pressure. Further, in a closed loop, the fluid commonly has to be stable.

The invention may specifically relate to adapting known industrial electrodialysis technologies to a small size and limited maintenance opportunity and irregular use of a commercial dishwashing process.

Summarizing and without excluding further possible embodiments, the following embodiments may be envisaged:
Embodiment 1: An electrodialysis device configured for preparing at least one alkaline fluid and at least one acidic fluid from an aqueous medium comprising at least one salt by using bipolar membrane electrodialysis, the electrodialysis device comprising:
   a. at least one fluidic stack comprising:
      - at least one acidic chamber having at least one acidic outlet for providing the acidic fluid;
      - at least one alkaline chamber having at least one alkaline outlet for providing the alkaline fluid; and
      - at least one bipolar membrane separating the acidic chamber and the alkaline chamber, the bipolar membrane enabling bipolar ion exchange between the acidic chamber and the alkaline chamber;
   b. at least one cathode compartment comprising at least one cathode electrode, the cathode compartment being separated from the fluidic stack by at least one membrane enabling ion exchange between the cathode compartment and the fluidic stack; and
   c. at least one anode compartment comprising at least one anode electrode, the anode compartment being separated from the fluidic stack by the at least one membrane enabling ion exchange between the anode compartment and the fluidic stack;
   wherein the electrodialysis device is configured for rinsing both the cathode compartment and the anode compartment with at least one rinsing fluid comprising at least one of the acidic fluid and the alkaline fluid, specifically the alkaline fluid.
Embodiment 2: The electrodialysis device according to the preceding embodiment, wherein the fluidic stack is disposed in between the cathode compartment and the anode compartment.
Embodiment 3: The electrodialysis device according to any one of the two preceding embodiments, wherein both the cathode compartment and the anode compartment are connected to at least one electrode rinse fluid path, the electrode rinse fluid path being configured for rinsing both the cathode compartment and the anode compartment with the at least one rinsing fluid.
Embodiment 4: The electrodialysis device according to the preceding embodiment, wherein the cathode compartment and the anode compartment are connected via the electrode rinse fluid path.
Embodiment 5: The electrodialysis device according to any one of the two preceding embodiments, wherein the electrodialysis device comprises at least one alkaline device outlet fluidically connected to the alkaline outlet and at least one acidic device outlet fluidically connected to the acidic outlet.
Embodiment 6: The electrodialysis device according to the preceding embodiment, wherein the at least one electrode rinse fluid path is at least one of: at least partially fluidically interconnected between the alkaline outlet and the alkaline device outlet; at least partially fluidically interconnected between the acidic outlet and the acidic device outlet.
Embodiment 7: The electrodialysis device according to any one of the two preceding embodiments, wherein the electrode rinse fluid path is fluidically connected to at least one of the acidic device outlet and the alkaline device outlet.
Embodiment 8: Electrodialysis device according to any one of the three preceding embodiments, wherein the electrodialysis device is configured according to one of the following:
   - the alkaline outlet is fluidically connected to the electrode rinse fluid path and wherein the electrode rinse fluid path is fluidically connected to the alkaline device outlet, such that the alkaline fluid generated by the alkaline chamber at least partially flows through the alkaline outlet into the electrode rinse fluid path, via the electrode rinse fluid path through at least one of the cathode compartment and the anode compartment, and through the alkaline device outlet;
   - the acidic outlet is fluidically connected to the electrode rinse fluid path and wherein the electrode rinse fluid path is fluidically connected to the acidic device outlet, such that the acidic fluid generated by the acidic chamber at least partially flows through the acidic outlet into the electrode rinse fluid path, via the electrode rinse fluid path through at least one of the cathode compartment and the anode compartment, and through the acidic device outlet.
Embodiment 9: The electrodialysis device according to any one of the six preceding embodiments, wherein the electrode rinse fluid path is configured such that the anode compartment and the cathode compartment are sequentially rinsed with at least one rinsing fluid comprising at least one of the acidic fluid and the alkaline fluid.
Embodiment 10: The electrodialysis device according to any one of the seven preceding embodiments, wherein the electrode rinse fluid path comprises at least one degassing device.
Embodiment 11: The electrodialysis device according to the preceding embodiment, wherein the degassing device comprises at least one of:
   - a catalyst, specifically at least one hydrogen combustion catalyst, for catalyzing a redox reaction of gases produced in the anode compartment with gases produced in the cathode compartment, specifically of hydrogen and oxygen;
   - a catalyst, specifically at least one hydrogen combustion catalyst, for catalyzing a redox reaction of gases produced in the cathode compartment with gases of an environment or surrounding of the degassing device;
   - a sparking device;
   - a frit; specifically a frit made of a porous ceramic material;
   - a fan, specifically a fan for diluting a hydrogen level below an explosive level; and
   - an open container, specifically an open container for degassing the electrode rinse fluid contained in the open container.
Embodiment 12: The electrodialysis device according to any one of the two preceding embodiments, wherein the electrode rinse fluid path comprises at least one anode degassing device disposed in the electrode rinse fluid path downstream the anode compartment and at least one cathode degassing device disposed in the electrode rinse fluid path downstream the cathode compartment.
Embodiment 13: A cleaning device for cleaning items, comprising:
   - at least one cleaning chamber for receiving the items;
   - at least one fluid application device for applying at least one cleaning fluid to the items received in the cleaning chamber; and
   - at least one electrodialysis device according to any one of the preceding embodiments,
   wherein the cleaning device is configured for feeding at least a part of at least one of the alkaline fluid and the acidic fluid prepared by the electrodialysis device to the fluid application device.
Embodiment 14: The cleaning device according to the preceding embodiment, wherein the cleaning device is configured for feeding at least part of the alkaline fluid to the fluid application device, specifically to at least one washing system of the fluid application device.
Embodiment 15: The cleaning device according to any one of the two preceding embodiments, wherein the cleaning device is configured for feeding at least a part of the acidic fluid to the fluid application device.
Embodiment 16: The cleaning device according to the preceding embodiment, wherein the cleaning device is configured for using the acidic fluid for at least one purpose selected from the group consisting of:
   - a washing process, wherein, in the washing process, both a part of the alkaline fluid and a part of the acidic fluid are applied to the items to be cleaned;
   - an alkaline exposure process, wherein, in the alkaline exposure process, at least a part of the acidic fluid is directly applied to the items to be cleaned;
   - an acidic exposure process, wherein, in the acidic exposure process, at least a part of the acidic fluid is directly applied to the items to be cleaned;
   - a washing process, wherein, in the washing process, both a part of the alkaline fluid and a part of the acidic fluid are fed to at least one common washing tank of the fluid application device;
   - a washing process, wherein, in the washing process, a part of the alkaline fluid and a part of the acidic fluid are fed to different washing tanks of the fluid application device;
   - a rinsing process, wherein, in the rinsing process, a part of the acidic fluid is applied to the items to be cleaned; and
   - a decalcifying process, wherein, in the decalcifying process, a part of the acidic fluid is applied to at least one of the fluid application device and the items to be cleaned, for decalcifying purposes; and
   - a decalcifying process, wherein, in the decalcifying process, a part of the acidic fluid is applied to a feed stream of a reverse osmosis device comprised by the cleaning device.
Embodiment 17: A method of preparing at least one alkaline fluid and at least one acidic fluid from an aqueous medium comprising at least one salt, the method comprising using the electrodialysis device according to any one of the preceding embodiments referring to an electrodialysis device for preparing the alkaline fluid and the acidic fluid, wherein the method comprises rinsing both the cathode compartment and the anode compartment with at least one rinsing fluid comprising at least one of the acidic fluid and the alkaline fluid.
Embodiment 18: A process of cleaning items, the process using the cleaning device according to any one of the preceding embodiments referring to a cleaning device, the process comprising:
   i. receiving the items to be cleaned in the at least one cleaning chamber of the cleaning device;
   ii. preparing the at least one alkaline fluid and at least one acidic fluid by using the electrodialysis device of the cleaning device; and
   iii. feeding the at least one of the alkaline fluid and the acidic fluid to the at least one fluid application device of the cleaning device; and
   iv. applying at least one cleaning fluid to the items received in the cleaning chamber by using the at least one fluid application device of the cleaning device.
Embodiment 19: The process of cleaning items according to the preceding embodiment, wherein the process further comprises a salt supply monitoring, the salt supply monitoring comprising at least one of a monitoring of a salt supply for preparing the aqueous medium and a monitoring of the aqueous medium itself, wherein at least one of steps ii. to iv. is automatically stopped in case the salt supply monitoring detects an insufficient salt supply, specifically a salt supply below at least one predetermined supply limit.
Embodiment 20: The process of cleaning items according to the preceding embodiment, wherein the process further comprises generating a salt replenishing signal in case the salt supply monitoring detects an insufficient salt supply.
Embodiment 21: The process of cleaning items according to any one of the two preceding embodiments, wherein the process further comprises automatically restarting the at least one stopped step in case the salt supply monitoring detects a sufficient replenishing of the salt supply.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: shows an embodiment of an electrodialysis device according to the present invention in a detailed schematic view;
- Figure 2: shows an embodiment of flow paths through an electrodialysis device according to the present invention in a detailed schematic view;
- Figure 3: shows an embodiment of a cleaning device according to the present invention in a detailed schematic view;
- Figure 4: shows an embodiment of flow paths through an electrodialysis device used for a first test and for a second test;
- Figures 5A to 5C: show experimental results of the first test showing an electrical conductivity in dependence of time (Figure 5A) and a pH in dependence of time for fluids in an acidic loop and in an electrode rinse path (Figure 5B), respectively, as well as a current and a voltage in dependence of time during the first test (Figure 5C);
- Figures 6A to 6C: show experimental results of the second test showing an electrical conductivity in dependence of time (Figure 6A) and a pH in dependence of time for fluids in an acidic loop and in an electrode rinse path (Figure 6B), respectively, as well as a current and a voltage in dependence of time during the second test (Figure 6C);
- Figure 7: shows an embodiment of flow paths through an electrodialysis device used for a third test and for a fourth test;
- Figures 8A to 8C: show experimental results of a third test showing an electrical conductivity in dependence of time (Figure 8A) and a pH in dependence of time for fluids in an acidic loop and in an electrode rinse path (Figure 8B), respectively, as well as a current and a voltage in dependence of time during the third test (Figure 8C); and
- Figures 9A to 9C: show experimental results of a fourth test showing an electrical conductivity in dependence of time (Figure 9A) and a pH in dependence of time for fluids in an acidic loop and in an electrode rinse path (Figure 9B), respectively, as well as a current and a voltage in dependence of time during the fourth test (Figure 9C).

### Detailed description of the embodiments

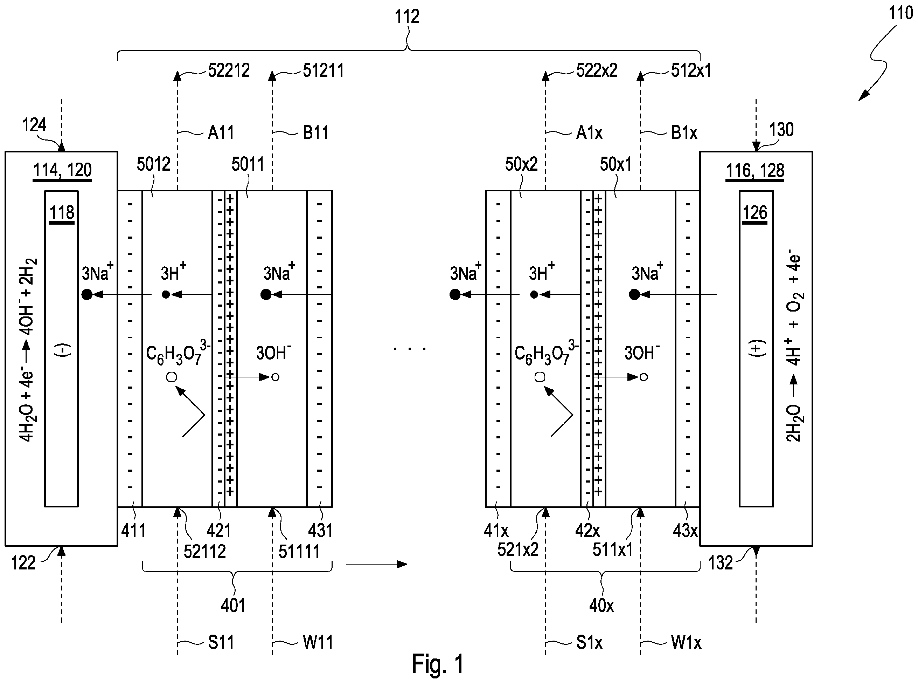

Figure 1 shows an exemplary embodiment of an electrodialysis device 110 in a schematic view. The electrodialysis device 110 is configured for preparing at least one alkaline fluid and at least one acidic fluid from an aqueous medium comprising at least one salt, specifically a solution of the at least one salt, by using bipolar membrane electrodialysis. The electrodialysis device 110 may comprise a fluidic stack 112, a cathode compartment 124 and an anode compartment 116. As can be seen in Figure 1, the fluidic stack 112 may be disposed in between the cathode compartment 114 and the anode compartment 116.

The fluidic stack 112 may comprise a plurality of stacked groups of chambers 40i, wherein i = 1, ... , x. Specifically, the fluidic stack 112 may comprise a plurality of repetitively iterating and essentially identical stacked groups comprising two or three chambers 50ik, wherein k = 1, 2 or 3. In the exemplary embodiment shown in Figure 1, each stacked group of chambers 40i of the fluidic stack 112 comprises two chambers 50ik.

The fluidic stack 112 may comprise at least one acidic chamber 50i2 having at least one acidic outlet 522i2 for providing the acidic fluid. The acidic chamber 50i2 may further comprise at least one acidic chamber inlet 521i2 for streaming fluid through the acidic chamber 50i2. In the exemplary embodiment shown in Figure 1, the acidic chamber inlet 521i2 may be configured for passing a stream S1i of the aqueous medium comprising the at least one salt into the acidic chamber 50i2. The aqueous medium comprising the at least one salt may be converted into the at least one acidic fluid in the acidic chamber 50i2 by using bipolar membrane electrodialysis. The acidic outlet 522i2 may be configured for removing a stream A1i of the at least one acidic fluid from the acidic chamber 50i2.

Further, the fluidic stack 112 may comprise at least one alkaline chamber 50i1 having at least one alkaline outlet 512i1 for providing the alkaline fluid. The alkaline chamber 50i1 may also comprise at least one alkaline chamber inlet 511i1 for streaming fluid through the alkaline chamber 50i1. The alkaline chamber inlet 511il may be configured for passing a stream W1i of an aqueous medium into the alkaline chamber 50i1, specifically for passing a stream of water. The aqueous medium may be converted into the at least one alkaline fluid in the alkaline chamber 50i1 by using bipolar membrane electrodialysis. The alkaline outlet 512i1 may be configured for removing a stream B1i of the at least one alkaline fluid from the alkaline chamber 50i1.

The fluidic stack 112 may further comprise at least one bipolar membrane 42i separating the acidic chamber 50i2 and the alkaline chamber 50i1.The bipolar membrane 42i may enable bipolar ion exchange between the acidic chamber 50i2 and the alkaline chamber 50i1.Each stacked group of chambers 40i may be walled on opposing sides by a cation exchange membrane on the cathode side 41i and a cation exchange membrane on the anode side 43i. The cation exchange membranes 41i, 43i may enable cation exchange between the respective group of chambers 40i and at least one of: a neighboring group of chambers 40i, the anode compartment 21 and the cathode compartment 11.

Further, the aqueous medium comprising the at least one salt, specifically the solution of the at least one salt, may comprise a sodium salt of a polybasic carboxylic acid. Thus, the at least one acidic fluid may comprise the aqueous medium comprising the polybasic carboxylic acid. The polybasic carboxylic acid may comprise a dicarboxylic acid or a tricarboxylic acid or a mixture of a dicarboxylic acid and a tricarboxylic acid, wherein the polybasic carboxylic acid may preferably comprise, more preferably may consist of, a tricarboxylic acid, wherein more preferably, the polybasic carboxylic acid may be citric acid. The sodium salt of the polybasic carboxylic acid may comprise monosodium citrate or disodium citrate or trisodium citrate or a mixture of two or more thereof, wherein the sodium salt of the polybasic carboxylic acid may preferably comprise, more preferably may be, trisodium citrate.

The cathode compartment 114 may comprise at least one cathode electrode 118. The cathode compartment 114 may be separated from the fluidic stack 112 by the at least one cation exchange membrane 411 enabling cation exchange between the cathode compartment 114 and the fluidic stack 112. However, other membranes, such as other ion exchange membranes or bipolar membranes, may also be feasible for separating the cathode compartment 114 and the fluidic stack 112. The cathode compartment 114 may further comprise at least one cathode chamber 120 for receiving a cathode rinsing fluid. The cathode electrode 118 may be disposed in the cathode chamber 120. The cathode chamber 120 may comprise at least one cathode chamber inlet 122 for passing the cathode rinsing fluid into the cathode chamber 120 and at least one cathode chamber outlet 124 for removing the cathode rinsing fluid from the cathode chamber 120.

The anode compartment 116 may comprise at least one anode electrode 126. The anode compartment 116 may be separated from the fluidic stack 112 by the at least one cation exchange membrane 43i enabling cation exchange between the anode compartment 116 and the fluidic stack 112. However, other membranes, such as other ion exchange membranes or bipolar membranes, may also be feasible for separating the anode compartment 116 and the fluidic stack 112. The anode compartment 116 may comprise at least one anode chamber 218 for receiving an anode rinsing fluid. The anode electrode 126 may be disposed in the anode chamber 128. The anode chamber 128 may comprise at least one anode chamber inlet 130 for passing the anode rinsing fluid into the anode chamber 128 and at least one anode chamber outlet 132 for removing the anode rinsing fluid from the anode chamber 128.

The cathode electrode 118 and the anode electrode 126, each, may have an electrode area of at least 50 cm², specifically an electrode area of 50 cm² to 400 cm², more specifically an electrode area of 100 cm² to 300 cm², most specifically an electrode area of 200 cm². The area of the bipolar membrane 42i and the cation exchange membranes 41i, 43i may correspond to the electrode area of the cathode electrode 118 and the anode electrode 126.

The bipolar membrane electrodialysis may comprise using an applied electric field. Specifically, an electric voltage of less than 50 V may be applied in between the cathode electrode 118 and the anode electrode 126, more specifically an electric voltage of 42 V or less. The applied electric field may drive the bipolar membrane electrodialysis, specifically by separating ions being present in the aqueous medium comprising the at least one salt of the acidic chamber 50i2 and the aqueous medium of the alkaline chamber 50i1. As a consequence of the separation of ions, the bipolar membrane electrodialysis may further involve a conversion of the aqueous medium comprising the at least one salt into the at least one acidic fluid and a conversion of the aqueous medium into the at least one alkaline fluid. An electric current density may be kept constant at a value in the range of 10 A/m² to 1500 A/m², specifically of 100 A/m² to 1000 A/m², more specifically of 200 A/m² to 400 A/m².

Specifically, the bipolar membrane electrodialysis may comprise at least two conversion reactions, wherein the two conversion reactions may be performed separate from each other in two different chambers 50ik of the electrodialysis device 112. The bipolar membrane electrodialysis may comprise at least one first conversion reaction to form the at least one alkaline fluid, wherein the first conversion reaction may comprise an interaction of the cation of the at least one salt with at least one hydroxide ion, and at least one second conversion reaction to form the at least one acidic fluid, wherein the second conversion reaction may comprise an interaction of the anion of the at least one salt with at least one hydrogen cation. For example, the first conversion reaction may comprise an interaction of the cation of the sodium salt of the polybasic carboxylic acid with at least one hydroxide ion to form sodium hydroxide and the second conversion reaction may comprise an interaction of the anion of the sodium salt of the polybasic carboxylic acid with at least one hydrogen cation to form the polybasic carboxylic acid. The first conversion reaction may be performed in the alkaline chamber 50i1, whereas the second conversion reaction may be performed in the in the acidic chamber 50i2. Thus, the two conversion reactions may be separated from each other by the bipolar membrane 43i in the electrodialysis device 110.

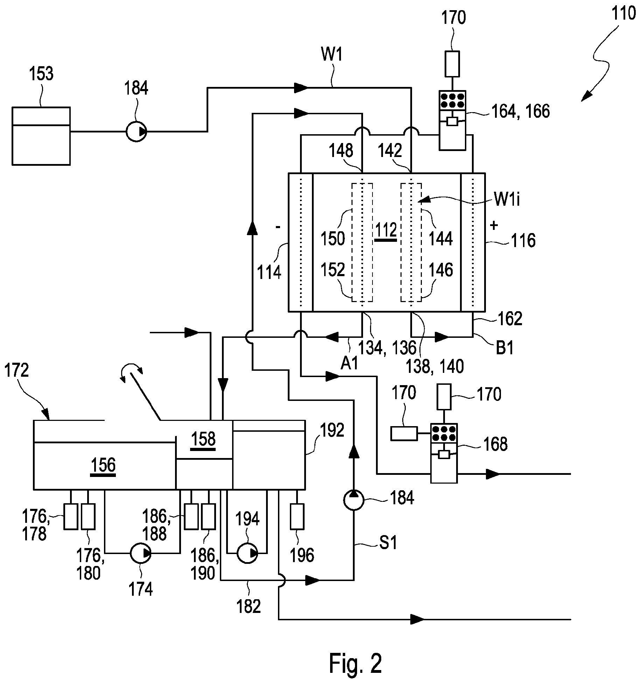

Figure 2 shows an embodiment of an electrodialysis device 110 according to the present invention in a detailed schematic view. Specifically, in Figure 2, an exemplary embodiment of flow paths through the electrodialysis device 110 is shown in a schematic view. The electrodialysis device 110 shown in Figure 2 may be embodied as explained above in the context of Figure 1. It shall be noted, however, that other embodiments of the electrodialysis device 110 are also feasible in conjunction with Figure 2. The streaming directions of the fluids are only exemplarily shown in Figure 2. However, other streaming directions opposing the shown streaming directions are also feasible.

As outlined above, the fluidic stack 112 may comprise a plurality of the acidic chambers 50i2, a plurality of the alkaline chambers 50i1 and a plurality of the bipolar membranes 42i. As can be seen in Figure 2, the plurality of the acidic chambers 50i2 may be fluidically connected to at least one common acidic outlet 134. The common acidic outlet 134 may also be referred to as acidic device outlet 136. The plurality of the alkaline chambers 50i1 may be fluidically connected to at least one common alkaline outlet 138. The common alkaline outlet 138 may also be referred to as alkaline device outlet 140.

The plurality of the alkaline chambers 50i1 may be fluidically connected to at least one common alkaline inlet 142. The common alkaline inlet 142 may be configured for providing the aqueous medium, specifically water, to the alkaline chamber inlets 511i1 which may be comprised by each alkaline chamber 50i1. Specifically, the common alkaline inlet 142 may comprise a dividing device 144 configured for dividing an incoming stream W1 of the aqueous medium into the streams W1i of the aqueous medium into the alkaline chambers 50i1. Thus, the common alkaline inlet 142 may be configured for providing at least a part of the incoming stream W1 of the aqueous medium to each of the alkaline chambers 50i1, specifically via the alkaline chambers inlets 511i1.

The common alkaline outlet 138 may be configured for providing the at least one alkaline fluid prepared in the electrodialysis device 110, specifically the at least one combined stream B1 of the at least one alkaline fluid. The common alkaline outlet 138 may be configured for combining the alkaline fluid provided by the alkaline outlets 512i1 of each alkaline chamber 50i1. For example, the common alkaline outlet 138 may also comprise a combining device 146 for combining the streams B1i of the at least one alkaline fluid from the plurality of alkaline chambers 50i1 to the combined stream B1 of the at least one alkaline fluid.

Further, the plurality of the acidic chambers 50i2 may be fluidically connected to at least one common acidic inlet 148. The common acidic inlet 148 may be configured for providing the aqueous medium comprising the at least one salt to the at least one acidic chamber inlet 521i2 which may be comprised by each acidic chamber 50i2. Specifically, the common acidic inlet 148 may comprise a dividing device 150 configured for dividing an incoming stream S1 of the aqueous medium comprising the at least one salt. Thus, the common acidic inlet 148 may be configured for providing at least a part of the incoming stream S1 of the aqueous medium comprising the at least one salt to each of the acidic chambers 50i2, specifically via the acidic chambers inlets 521i2.

The common acidic outlet 134 may be configured for providing the at least one acidic fluid prepared in the electrodialysis device 110, specifically the at least one combined stream A1 of the at least one acidic fluid. Specifically, the common acidic outlet 134 may be configured for combining the acidic fluid provided by the acidic outlets 522i2 of each acidic chamber 50i2. For example, the common acidic outlet 134 may also comprise a combining device 152 for combining the streams A1i of the at least one acidic fluid from the plurality of acidic chambers 50i2 to the combined stream A1 of the at least one acidic fluid.

The electrodialysis device 110 may comprise at least two different flow paths, wherein in a first flow path, the incoming stream W1 of the aqueous medium may be passed through the fluidic stack 112, thereby being converted into the combined stream B1 of the at least one alkaline fluid, wherein in a second flow path, the incoming stream S1 of the aqueous medium comprising the at least one salt may be passed through the fluidic stack 112, thereby being converted into the combined stream A1 of the at least one acidic fluid. As an example, the incoming stream W1 of the aqueous medium may be provided to the electrodialysis device 110 from a container 153 by means of a pump 154. However, other options, such as a supply for providing the aqueous medium directly to the electrodialysis device 110 may also be possible. Further, the incoming stream S1 of the aqueous medium comprising the at least one salt 156 may be provided from a buffer container 158 by means of a pump 160.

The electrodialysis device 110 is configured for rinsing at least one of the cathode compartment 114 and the anode compartment 116 with at least one rinsing fluid comprising the alkaline fluid. The cathode chamber 120 and the anode chamber 128 may be fluidically connected to at least one electrode rinse fluid path 162. The electrode rinse fluid path 162 may be configured for rinsing the cathode compartment 114 and the anode compartment 116 with the at least one rinsing fluid. The cathode chamber 120 and the anode chamber 128 may be connected via the electrode rinse fluid path 162.

As outlined above, the electrodialysis device 110 may comprise the at least one alkaline device outlet 140 fluidically connected to the alkaline outlets 512i1 and the at least one acidic device outlet 136 fluidically connected to the acidic outlets 522i2. The at least one electrode rinse fluid path 162 may be at least partially fluidically interconnected between the alkaline outlets 512i1 and the alkaline device outlet 140. Specifically, the electrode rinse fluid path 162 may be fluidically connected to the alkaline device outlet 140.

Specifically, the electrodialysis device 110 may be configured as follows: The alkaline outlets 512i 1 may be fluidically connected to the electrode rinse fluid path 162 and the electrode rinse fluid path 162 may be fluidically connected to the alkaline device outlet 140, such that the alkaline fluid generated by the alkaline chambers 50i1 at least partially flows through the alkaline outlets 512i1 into the electrode rinse fluid path 162, via the electrode rinse fluid path 162 through the anode compartment 116 and the cathode compartment 114. Specifically, the electrode rinse fluid path 162 may be configured such that the anode compartment 116 and the cathode compartment 114 are sequentially rinsed with the at least one rinsing fluid comprising the alkaline fluid.

Further, as shown in Figure 2, the electrode rinse fluid path 162 may further comprise at least one degassing device 164. Specifically, the electrode rinse fluid path 162 may comprise at least one anode degassing device 166 disposed in the electrode rinse fluid path 162 downstream the anode compartment 116 and at least one cathode degassing device 168 disposed in the electrode rinse fluid path 162 downstream the cathode compartment 114.

Further, the degassing devices 164 may respectively comprise at least one sensor device 170, specifically at least one sensor device 170 selected from the group consisting of a temperature sensor, a pressure sensor, a hydrogen sensor and an oxygen sensor. The sensor device 170 may specifically be configured for monitoring the redox reaction. For example, the temperature sensor may be configured for monitoring a temperature in the degassing devices 164, wherein the temperature may be indicative of the redox reaction taking place in the degassing devices 164.

The exemplary embodiment according to Figure 2 may further comprise at least one brine container 172. The brine container 172 may be configured for receiving a liquid supply of the aqueous medium comprising the at least one salt 156, specifically the solution of the at least one salt 156. The brine container 172 may comprise at least one pump 174 for providing the aqueous medium comprising the at least one salt to the buffer container 158. As shown in Figure 2, the aqueous medium comprising the at least one salt may be provided indirectly to the acidic chamber 50i2 via the at least one buffer container 158. Further, the brine container 172 may comprise at least one sensor device 176 for determining at least one property of the aqueous medium comprising the at least one salt. For example, the brine container 172 may comprise at least one conductivity sensor 178 and at least one filling level sensor 180.

Further, there may be at least one recirculation loop 182, specifically at least one acidic recirculation loop. The recirculation loop 182 may specifically be a closed recirculation loop. The recirculation loop 182 may fluidically connect the buffer container 158 with the electrodialysis device 110, specifically with the at least one acidic chamber 50i2 of the fluidic stack 112 of the electrodialysis device 110, and vice versa. The recirculation loop 182 may comprise at least one circulation pump 184. Fluid, specifically the acidic fluid, may be repeatedly guided through the electrodialysis device 110, specifically through the at least one acidic chamber 50i2 of the fluidic stack 112 of the electrodialysis device 110.

The buffer container 158 may be configured for storing an amount of the fluid, specifically the acidic fluid. The buffer container 158 may further comprise at least one sensor device 186 for determining at least one property of the amount of the acidic fluid. For example, the buffer container 158 may comprise at least one conductivity sensor 188 and at least one filling level sensor 190. The sensor device 186, specifically the conductivity sensor 188, may be used to detect a sufficient conversion of the aqueous medium comprising the at least one salt into the acidic fluid. The sufficient conversion may be detected based on the pH values of the fluid in the buffer container 158. Based on the pH value determined by the sensor device 186, the fluid, specifically the acidic fluid, comprised by the buffer container 158 may be transfered into an acid container 192 such as via pump 194. The acid container 192 may comprise a filling level sensor 196.

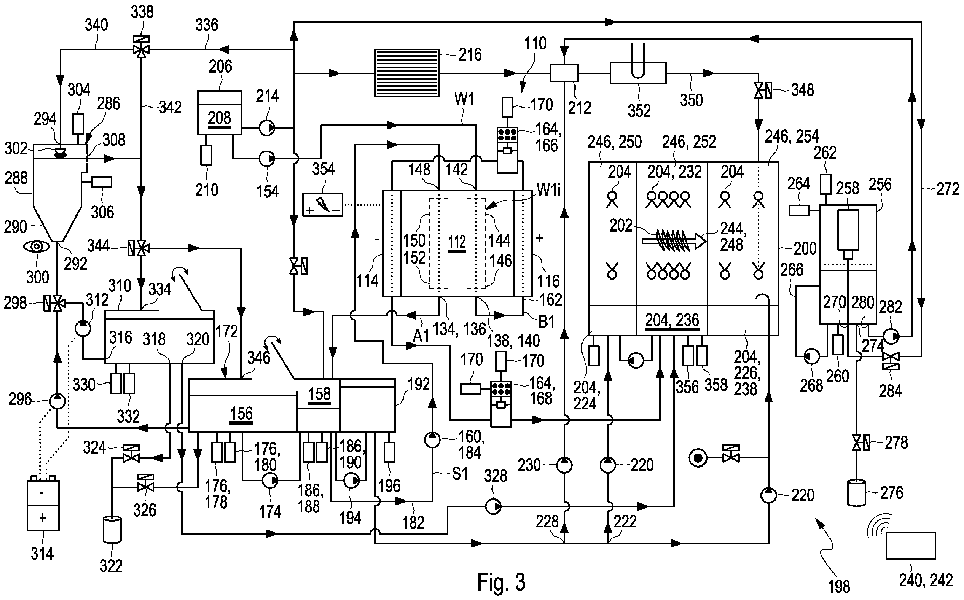

Figure 3 shows an embodiment of a cleaning device 198 according to the present invention in a detailed schematic view.

The cleaning device 198 comprises:
a. at least one cleaning chamber 200 for receiving the items 202;
b. at least one fluid application device 204 for applying at least one cleaning fluid to the items 202 received in the cleaning chamber 200; and
c. the at least one electrodialysis device 110 configured for preparing the at least one alkaline fluid and the at least one acidic fluid from the aqueous medium comprising at least one salt, specifically a solution of at least one salt, by using bipolar membrane electrodialysis.

The cleaning device 198 is configured for feeding at least a part of the alkaline fluid to the fluid application device 204, specifically for use in the cleaning chamber 200.

The electrodialysis device 110 may specifically be embodied as explained above in the context of Figures 1 and 2. It shall be noted, however, that other embodiments of the electrodialysis device 110 are also feasible in conjunction with the cleaning device 198 of Figure 3. As illustrated in Figure 3, the electrodialysis device 110 may comprise at least one power supply 354.

The cleaning device 198 may comprise at least one supply 206 for providing the aqueous medium, specifically at least one water supply, more specifically at least one freshwater supply, more specifically at least one osmotic water supply. The supply 206 may comprise at least one net separator 208 which may specifically have at least one filling level sensor 210.

The supply 206 may be fluidically connected to the electrodialysis device 110, specifically to the at least one alkaline chamber 50i1 of the fluidic stack 112 of the electrodialysis device 110 such as via the pump 154. Additionally, the supply 206 may be connected to further components of the cleaning device 198 for providing the aqueous medium to further components of the cleaning device 198, for example to at least one blending device 212 such as via pump 214. A flow path from the supply 206 to the blending device 212 may further comprise at least one exhaust air heat recovery device 216.

The acid container 192 may be fluidically connected to the fluid application device 204, for applying the acidic fluid to the items 202 to be cleaned. The fluid connection between the acid container 192 and the fluid application device 204 may comprise at least one pump 220, specifically at least one dosing pump, for pumping the acidic fluid from the acid container 192 to the fluid application device 204. Specifically, the flow path from the acid container 192 to the fluid application device 204 may comprise at least one separation device 222 for dividing the stream in the direction of a pre-washing tank 224 of the cleaning device 198 and in the direction of a rinsing tank 226 of the cleaning device 198. Further, the flow path from the acid container 192 to the fluid application device 204 may comprise at least one further separation device 228 for further dividing the stream in the direction of the blending device 212 such as via pump 230.

As outlined above, the fluid application device 204 is configured for applying at least one cleaning fluid to the items 202 received in the cleaning chamber 200. The cleaning fluid may specifically comprise at least one washing fluid. The fluid application device 204 may comprise at least one washing device 232 for applying the washing fluid to the items 202 to be cleaned. The cleaning device 198 may be configured for feeding the alkaline fluid and the acidic fluid to the washing device 232 such as to the pre-wash tank 224, the washing tank 236 and/or to the rinsing tank 226. Various options are feasible. The feeding of the acidic fluid may be separate from the feeding of the alkaline fluid. The washing tank 236 may comprise at least one filling level sensor 356 and at least one conductivity sensor 358.

Further, the at least one cleaning fluid may comprise at least one rinsing fluid. The fluid application device 204 may comprise at least one rinsing device 238 for applying the rinsing fluid to the items to be cleaned. The cleaning device 198 may comprise the at least one blending device 212 for mixing the acidic fluid with at least one further component of the rinsing fluid, specifically at least one further component selected from the group consisting of water, specifically freshwater, more specifically warm freshwater; a rinsing concentrate, specifically a rinsing concentrate comprising at least one surfactant, more specifically at least one non-ionic surfactant.

The cleaning device 198 may further comprise at least one container 256 having at least one clear rinse tank 258. The container 256 may have at least one filling level sensor 260, at least one reed sensor 262 and at least one interlock device 264. However, instead of the reed sensor 262, also other kinds of devices may be applied. Further, the cleaning device 198 may comprise at least one recirculation loop 266, specifically at least one closed recirculation loop. The recirculation loop 266 may comprise at least one circulation pump 268. Fluid may be repeatedly guided through the container 256. The container 256 may comprise at least one inlet 270 being fluidically connected to the supply 206 such as via flow path 272. The flow path 272 may comprise at least one valve 284. Further, the container 256 may comprise at least one first outlet 274 being fluidically connected to a drain 276 such as via at least one valve 278. Further, the container 256 may comprise at least one second outlet 280 being fluidically connected to the blending device 212 such as via at least one pump 282.

Further, the cleaning device 198 may comprise at least one salt dissolving device 286 for providing at least one salt solution. The salt dissolving device 286 may comprise at least one salt receiving container 288. The salt receiving container 288 may comprise at least one input opening for at least one salt (not shown in Figure 3). The cleaning device 198 may have at least one scanning device 300 for scanning a packaging of the salt. Further, the salt receiving container 288 may comprise at least one funnel-shaped bottom 290. The salt receiving container 288 may have at least one first inlet 292 at a lower end of the salt receiving container 288. Further, the salt receiving container 288 may have at least one second inlet 294 at an upper end of the salt receiving container 288. The first inlet 292 may be fluidically connected to the brine container 172 such as via a pump 296 and a valve 298. The second inlet 294 may be fluidically connected to the supply 206. Specifically, at least one cleaning nozzle 302 may be arranged at the upper end of the salt receiving container 288 being fluidically connected to the second inlet 294. Further, the salt receiving container 288 may comprise at least one interlock device 304 and at least one reed sensor 306. However, instead of the reed sensor 306, also other kinds of devices may be applied. Further, the salt receiving container 288 may have at least one outlet 308 at an upper end of the salt receiving container 288.

Further, the salt dissolving device 286 may comprise at least one brine chamber 310 for receiving the salt solution. The brine chamber 310 may be fluidically connected to the first inlet 292 of the salt receiving container 288 such has via a first outlet 316 of the brine chamber 310 and via the valve 298. A flow path between the brine chamber 310 and the valve 298 may comprise at least one pump 312. The pumps 312 and 296 may be operated with an energy storage device 314. The energy storage device 314 may conprse at least one of a battery and a condenser. The brine chamber 310 may further comprise at least one second outlet 318 and at least one third outlet 320. The second outlet 318 may be fluidically connected to at least one drain 322 such as via at least one valve 324. Also the brine container 172 may comprise at least one outlet being fluidically connected the drain 322 such as via at least one valve 326. The third outlet 320 may be fluidically connected to the cleaning chamber 200, specifically to the washing tank 236, such as via pump 328. Further, the brine chamber 310 may comprise at least one filling level sensor 330 and at least one conductivity sensor 332. Further, the brine chamber 310 may comprise at least one inlet 334. The inlet 334 may be fluidically connected to the supply 206. A flow path 336 from the supply 206 to the inlet 334 may comprise a first valve 338 dividing the flow path 336 into a first part 340 to the second inlet 294 of the salt receiving container 288 and into a second part 342 to the inlet 334 of the brine chamber 310 . The second part 342 may further comprise at least one second valve 344 for providing an additional path to an inlet 346 of the brine container 172. The terms "first valve" and "second valve" may be considered as nomenclature only without specifying a specific ranking.

As schematically shown in Figure 3, the electrodialysis device 110 may further comprise at least one electrodialysis controller 240. The electrodialysis controller 240 may be configured for controlling the preparing of the at least one alkaline fluid and the at least one acidic fluid, specifically by controlling an electric power provided to the electrodialysis device 110, more specifically by controlling an electric current density and/or an electric voltage applied to the cathode electrode 118 and the anode electrode 126 of the electrodialysis device 110.

Further, the cleaning device 198 may comprise at least one control device 242 for controlling an operation of the cleaning device 198. The control device 242 may be configured for controlling the feeding of the alkaline fluid to the fluid application device 204 and optionally also for controlling the feeding of the acidic fluid to the fluid application device 204. For example, the control device 242 may comprise at least one processor which may be configured, such as by software programming, for supporting controlling the operation of the cleaning device 198. As can be seen in Figure 3, the electrodialysis controller 240 and the control device 242 may be embodied in one single device. However, other options, such as separate embodiments of the controllers are also feasible.

As schematically shown in Figure 3, the cleaning device 198 may further comprise at least one transport device 244 for transporting the items 202 to be cleaned through the cleaning chamber 200. For example, the transport device 244 may comprise a conveyor, such as a belt conveyor and/or a chain conveyor, for transporting the items 202 to be cleaned. The cleaning chamber 200 may comprise a plurality of cleaning compartments 246 sequentially arranged in a transport direction 248 of the transport device 244. As can be seen in Figure 3, the cleaning compartments 246 may comprise a prewashing compartment 250, followed by a washing compartment 252 and a rinsing compartment 254. The blending device 212 may be fluidically connected to the rinsing compartment 254 such as via valve 348. A flow path 350 between the blending device 212 and the rinsing compartment 254 may additionally comprise at least one boiler 352.

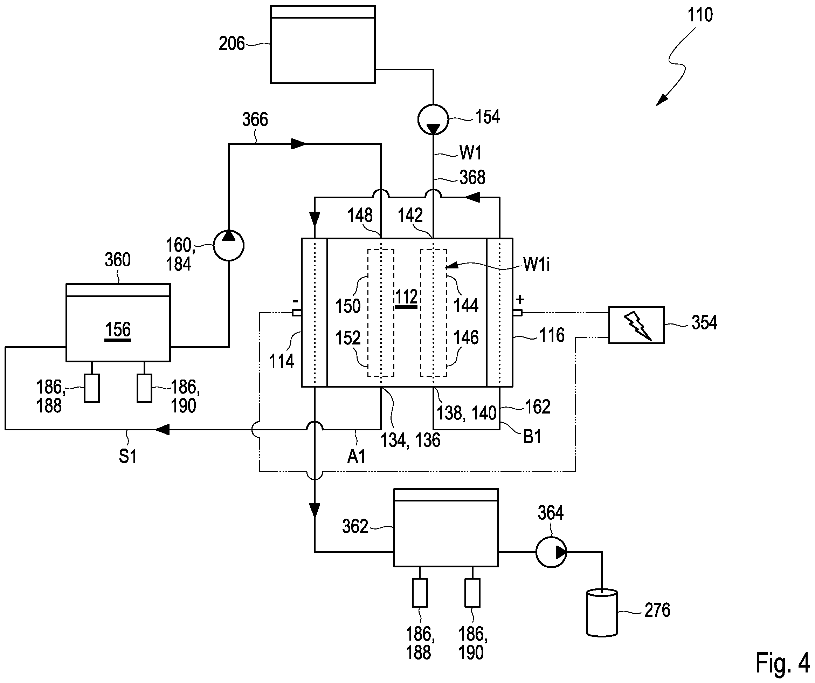

Figure 4 shows an embodiment of flow paths through an electrodialysis device 110 used for a first test and for a second test. The electrodialysis device 110 shown in Figure 4 may be embodied as explained above in the context of Figure 1. The streaming directions of the fluids may correspond at least partially to the streaming direction of fluids as shown in Figure 2. Thus, reference to the description of Figures 1 and 2 above is made.

The setup according to Figure 4 may comprise the at least one supply 206 for providing osmotic water. The supply 206 may be fluidically connected to the electrodialysis device 110, specifically to the common alkaline inlet 142 such as via the pump 154.

Further, the setup according to Figure 4 may be configured for providing an incoming stream S1 of the aqueous medium comprising the at least one salt 156. The aqueous medium comprising the at least one salt 156 may be provided from a container 360. The container 360 may be fluidically connected to the common acidic inlet 148.

Further, downstream the cathode compartment 114 at least one lye container 362 may be disposed. However, also other configurations may be possible. Exemplarily, the lye container 362 may be arranged downstream the anode compartment 116 (not shown in Figure 4). The lye container 362 may comprise at least one conductivity sensor 188 and at least one filling level sensor 190. The lye container 362 may be fluidically connected to a drain 276 such as via at least one pump 364.

The flow paths through the electrodialysis device 110 were utilized for performing a first test. An acidic fluid path 366 formed a closed loop and comprised 30 % of sodium citrate. An alkaline fluid path 368 was filled once with osmotic water. Thus, in the beginning, no sodium hydroxide solution was present in the alkaline fluid path 368.

Further, in all tests 1 to 2, the voltage was limited to 40 V. Further, in all tests 1 to 2 the current was kept constant at essentially 8 A. Further, in all tests 1 to 2, the pump speed respectively the flow rate was the same for all paths.

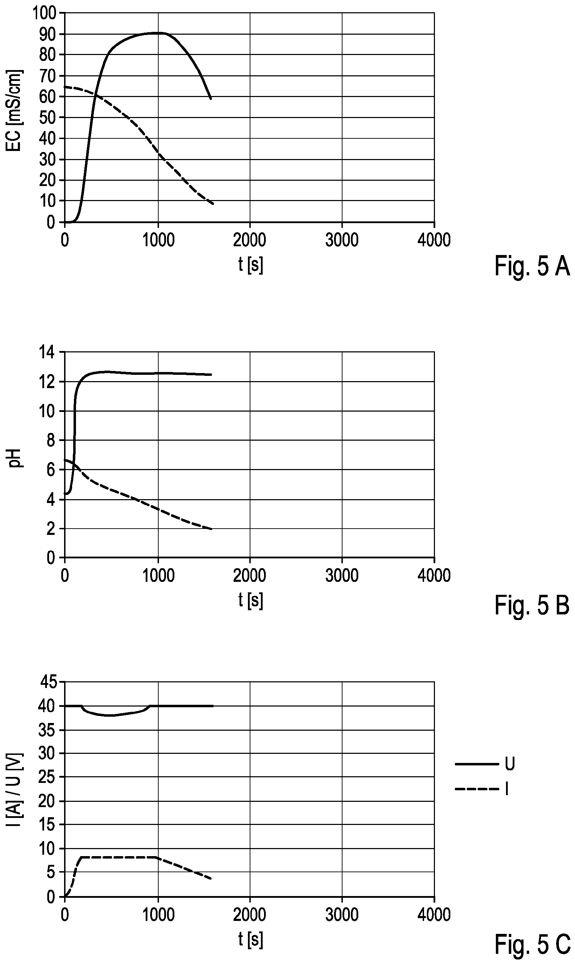

Figures 5A to 5C show experimental results of the first test. In Figure 5A an electrical conductivity EC in mS/cm of fluid in the acidic fluid path 366 (dashed line) and of fluid in the alkaline fluid path 368 (solid line) is shown in dependency of time t in s. In Figure 5B a pH fluid in the acidic fluid path 366 (dashed line) and of fluid in the alkaline fluid path 368 (solid line) is shown in dependency of time t in s. In Figure 5C a current I in A (dashed line) and a voltage U in V (solid line) are respectively shown in dependency of time t in s.

As can be seen in Figure 5A, the electrical conductivity EC of the fluid in the acidic fluid path 366 forming a closed loop decreased over time. Further, the electrical conductivity EC of the fluid in the alkaline fluid path increased over time.

Further, as can be seen in Figure 5B, the pH of the fluid in the acidic fluid path 366 forming a closed loop decreased over time. Further, the pH of the fluid in the alkaline fluid path increased over time.

As can be seen from Figures 5A and 5B, there was a start-up sequence of 5 to 10 minutes.

The flow paths through the electrodialysis device 110 were further utilized for performing a second test. An acidic fluid path 366 formed a closed loop and comprised 30 % of sodium citrate. For the second test, the electrodialysis device 110 was already in operation beforehand. Thus, sodium hydroxide solution was present in the electrodialysis device 110 and in the alkaline fluid path 368 before starting the second test. Upstream the electrodialysis device 110, osmotic water was present. Thus, the alkaline fluid path 368 was filled once with osmotic water and the electrodialysis device 110 was operated until a base concentration reached a steady state. After that, the second test was started.

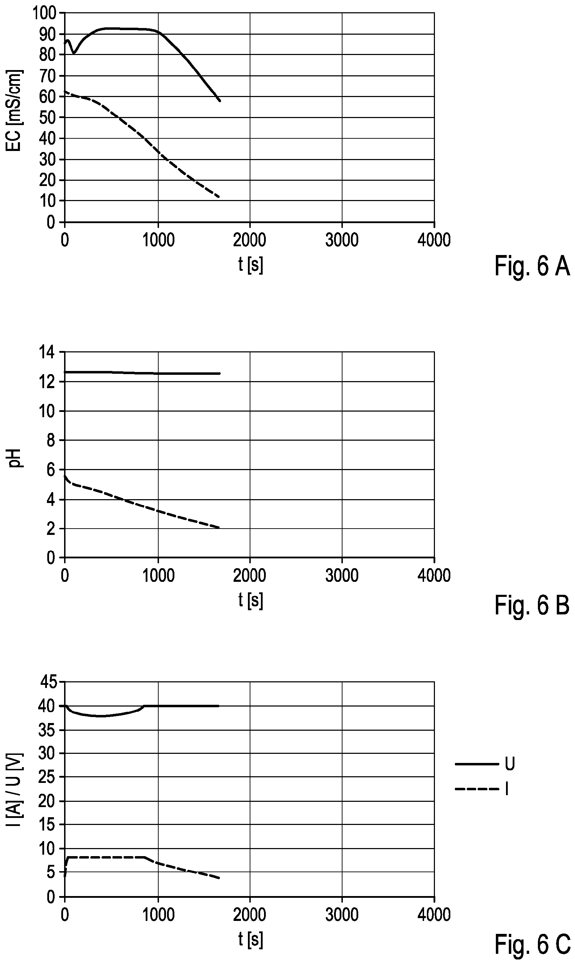

Figures 6A to 6C show experimental results of the second test. In Figure 6A an electrical conductivity EC in mS/cm of fluid in the acidic fluid path 366 (dashed line) and of fluid in the alkaline fluid path 368 (solid line) is shown in dependency of time t in s. In Figure 6B a pH fluid in the acidic fluid path 366 (dashed line) and of fluid in the alkaline fluid path 368 (solid line) is shown in dependency of time t in s. In Figure 6C a current I in A (dashed line) and a voltage U in V (solid line) are respectively shown in dependency of time t in s.

As can be seen in Figure 6A, the electrical conductivity EC of the fluid in the acidic fluid path 366 forming a closed loop decreased over time. Further, the electrical conductivity EC of the fluid in the alkaline fluid path 368 was in a steady state, specifically above 90 mS/cm within about 5 min.

Further, as can be seen in Figure 6B, the pH of the fluid in the acidic fluid path 366 forming a closed loop decreased over time. Further, the pH of the fluid in the alkaline fluid path 368 was above 12 from the beginning. The electrodialysis device 110 was not manually filled but was ran in an 8A mode until a constant concentration of sodium hydroxide was present in the alkaline fluid path referring to a steady state.

As can be seen from Figures 6A and 6B, the set-up ran immediately.

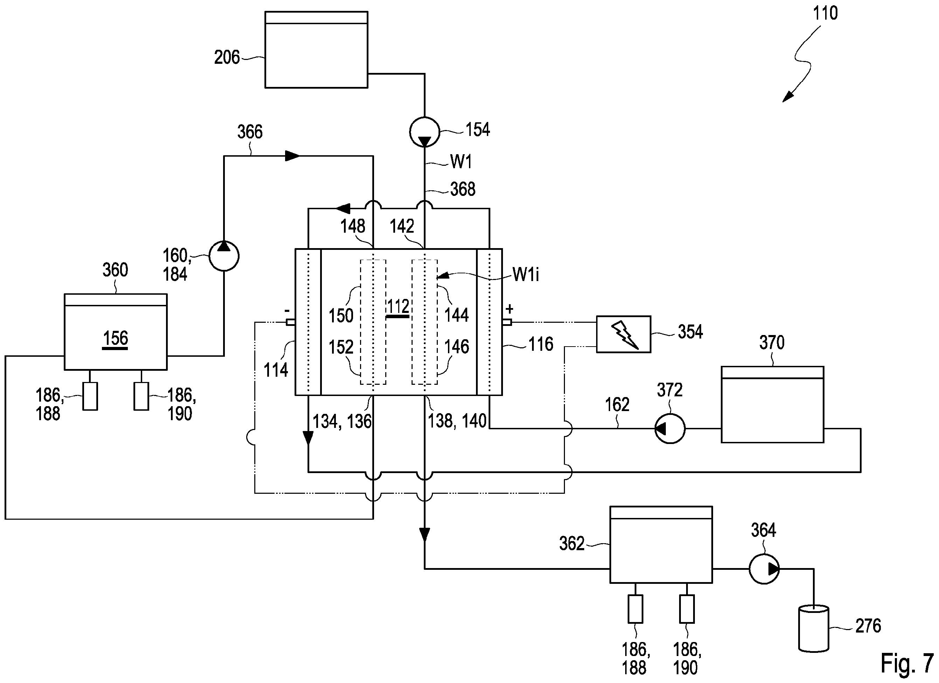

Figure 7 shows an embodiment of flow paths through an electrodialysis device 110 used for a third test and for a fourth test. The electrodialysis device 110 shown in Figure 7 may be embodied as explained above in the context of Figure 1. The streaming directions of the fluids are may correspond at least partially to the streaming direction of fluids as shown in Figure 2 or in Figure 4. Thus, reference to the description of Figures 1, 2 and 4 above is made.

In the setup according to Figure 7, the electrode rinse fluid path 162 formed a closed loop. A container 370 for electrode fluid and/or for osmotic water was present in the electrode rinse fluid path 162 as well as a pump 372. The common alkaline outlet 138 was fluidically connected to the lye container 362 comprising the at least one conductivity sensor 188 and the at least one filling level sensor 190. The lye container 362 may be fluidically connected to the drain 276 such as via the at least one pump 364

The flow paths through the electrodialysis device 110 according to Figure 7 were utilized for performing the third test. For the third test, the electrode rinse fluid path 162 formed a closed loop comprising 30 % of sodium citrate. Further, the acidic fluid path 366 formed a closed loop and comprised 30 % of sodium citrate for the third and the fourth test. In case of the fourth test, the electrode rinse fluid path 162 formed a closed loop comprising osmotic water. For the third test and for the fourth test, the alkaline fluid path 368 was respectively filled once with osmotic water. Thus, in the beginning of the third and the fourth test, no sodium hydroxide solution was present in the alkaline fluid path 368.

Further, in all tests 3 to 4, the voltage was limited to 40 V. Further, in all tests 3 to 4, the current was kept constant at essentially 8 A. Further, in all tests 3 to 4, the pump speed respectively the flow rate was the same for all paths

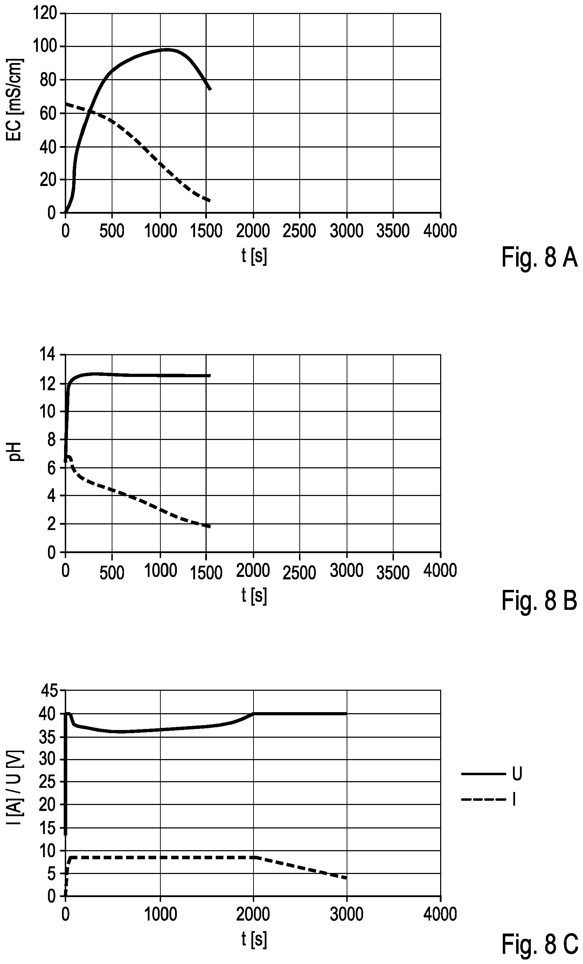

Figures 8A to 8C show experimental results of the third test. In Figure 8A an electrical conductivity EC in mS/cm of fluid in the acidic fluid path 366 (dashed line) and of fluid in the alkaline fluid path 368 (solid line) is shown in dependency of time t in s. In Figure 8B a pH fluid in the acidic fluid path 366 (dashed line) and of fluid in the alkaline fluid path 368 (solid line) is shown in dependency of time t in s. In Figure 8C a current I in A (dashed line) and a voltage U in V (solid line) are respectively shown in dependency of time t in s.

As can be seen in Figure 8A, the electrical conductivity EC of the fluid in the acidic fluid path 366 forming a closed loop decreased over time. Further, the electrical conductivity EC of the fluid in the alkaline fluid path 368 increased over time.

Further, as can be seen in Figure 8B, the pH of the fluid in the acidic fluid path 366 forming a closed loop decreased over time. Further, the pH of the fluid in the alkaline fluid path 368 was above 12 within about one minute.

As can be seen from Figures 8A and 8B, the set-up ran immediately. However, it has to be noted that the short start-up sequence may originate from the circumstance that the EC and pH measuring devices were installed in a beaker directly after the fluidic stack.

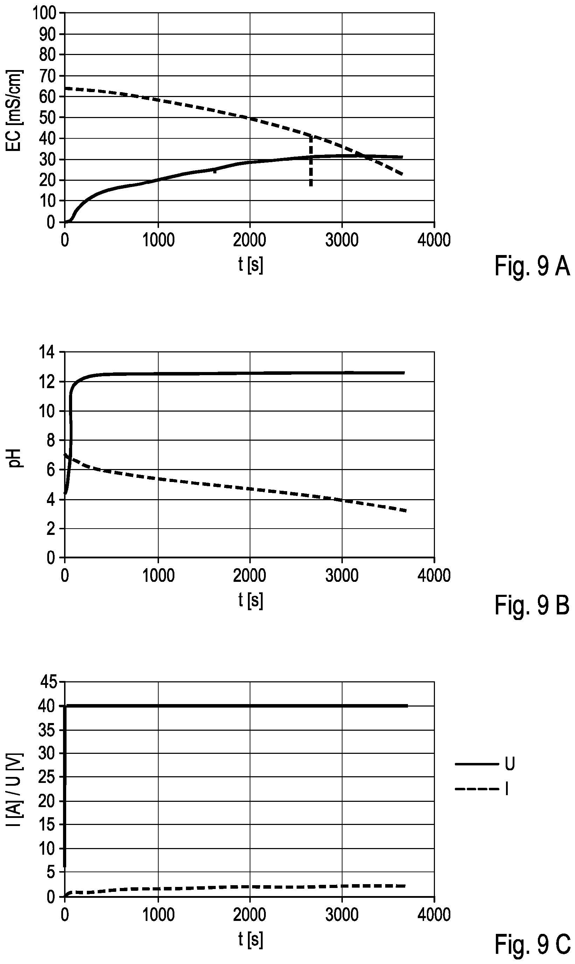

Figures 9A to 9C show experimental results of the fourth test. In Figure 9A an electrical conductivity EC in mS/cm of fluid in the acidic fluid path 366 (dashed line) and of fluid in the alkaline fluid path 368 (solid line) is shown in dependency of time t in s. In Figure 9B a pH fluid in the acidic fluid path 366 (dashed line) and of fluid in the alkaline fluid path 368 (solid line) is shown in dependency of time t in s. In Figure 9C a current I in A (dashed line) and a voltage U in V (solid line) are respectively shown in dependency of time t in s.

As can be seen in Figure 9A, the electrical conductivity EC of the fluid in the acidic fluid path 366 forming a closed loop decreased over time. Further, the electrical conductivity EC of the fluid in the alkaline fluid path 368 increased over a relatively long time.

Further, as can be seen in Figure 9B, the pH of the fluid in the acidic fluid path 366 forming a closed loop decreased over time. Further, the pH of the fluid in the alkaline fluid path 368 increased over time.

Thus, surprisingly, some sodium hydroxide was produced. Due to the very low electrical conductivity at the beginning of the test, very little sodium hydroxide was produced.

### List of reference numbers

- 110: electrodialysis device
- 112: fludic stack
- 114: cathode compartment
- 116: anode compartment
- 118: cathode electrode
- 120: cathode chamber
- 122: cathode chamber inlet
- 124: cathode chamber outlet
- 126: anode electrode
- 128: anode chamber
- 130: anode chamber inlet
- 132: anode cahmber outlet
- 134: common acidic outlet
- 136: acidic device outlet
- 138: common alkaline outlet
- 140: alkaline device outlet
- 142: common alkaline inlet
- 144: dividing device
- 146: combining device
- 148: common acidic inlet
- 150: dividing device
- 152: combining device
- 153: container
- 154: Pump
- 156: aqueous medium comprising the at least one salt
- 158: buffer container
- 160: Pump
- 162: electrode rinse fluid path
- 164: degassing device
- 166: anode degassing device
- 168: cathode degassing device
- 170: sensor device
- 172: brine chamber
- 174: Pump
- 176: sensor device
- 178: conductivity sensor
- 180: filling level sensor
- 182: recirculation loop
- 184: circulation pump
- 186: sensor device
- 188: conductivity sensor
- 190: filling level sensor
- 192: acid container
- 194: Pump
- 196: filling level sensor
- 198: cleaning device
- 200: cleaning chamber
- 202: Item
- 204: fluid application device
- 206: Supply
- 208: net separator, backflow prevention device
- 210: filling level sensor
- 212: blending device
- 214: Pump
- 216: exhaust air heat recovery device
- 218: flow path
- 220: pump
- 222: separation device
- 224: pre-washing tank
- 226: rinsing tank
- 228: separation device
- 230: Pump
- 232: washing device
- 236: washing tank
- 238: rinsing device
- 240: electrodialysis controller
- 242: control device
- 244: transport device
- 246: cleaning compartment
- 248: transport direction
- 250: prewashing compartment
- 252: washing compartment
- 254: rinsing compartment
- 256: container
- 258: clear rinse tank
- 260: filling level sensor
- 262: reed sensor
- 264: interlock device
- 266: recirculation loop
- 268: circulation pump
- 270: Inlet
- 272: flow path
- 274: first outlet
- 276: Drain
- 278: Valve
- 280: second inlet
- 282: Pump
- 284: Valve
- 286: salt dissolving device
- 288: salt receiving container
- 290: funnel-shaped buttom
- 292: first inlet
- 294: second inlet
- 296: Pump
- 298: Valve
- 300: scanning device
- 302: cleaning nozzle
- 304: interlock device
- 306: reed sensor
- 308: Outlet
- 310: brine chamber
- 312: Pump
- 314: energy storage container
- 316: first outlet
- 318: second outlet
- 320: third outlet
- 322: Drain
- 324: Valve
- 326: Valve
- 328: Pump
- 330: filling level sensor
- 332: conductivity sensor
- 334: Inlet
- 336: flow path
- 338: first valve
- 340: first part
- 342: second part
- 344: second valve
- 346: Inlet
- 348: Valve
- 350: flow path
- 352: Boiler
- 354: power supply
- 356: filling level sensor
- 358: conductivity sensor
- 360: container
- 362: lye container
- 364: Pump
- 366: acidic fluid path
- 368: alkaline fluid path
- 370: container
- 372: Pump
- A1: combined stream of the at least one acidic fluid
- A1i: stream of the at least one acidic fluid from the acidic chamber
- B1: combined stream of the at least one alkaline fluid
- B1i: stream of the at least one alkaline fluid from the alkaline chamber
- S1: incoming stream of the aqueous medium comprising the at least one salt
- S1i: stream of the aqueous medium comprising the at least one salt into the acidic chamber or into the brine chamber
- W1: incoming stream of the aqueous medium
- W1i: stream of an aqueous medium into the alkaline chamber
- 40i: group of chambers
- 41i: cation exchange membrane on the cathode side
- 42i: bipolar membrane
- 43i: cation exchange membrane on the anode side
- 50ik: chamber k in group i
- 50i1: alkaline chamber
- 50i2: acidic chamber
- 511i1: alkaline chamber inlet
- 512i1: alkaline outlet
- 521i2: acidic chamber inlet
- 522i2: acidic outlet

## Claims

1. An electrodialysis device (110) configured for preparing at least one alkaline fluid and at least one acidic fluid from an aqueous medium comprising at least one salt by using bipolar membrane electrodialysis, the electrodialysis device (110) comprising:
a. at least one fluidic stack (112) comprising:
- at least one acidic chamber (50i2) having at least one acidic outlet (522i2) for providing the acidic fluid;
- at least one alkaline chamber (50i1) having at least one alkaline outlet (512i1) for providing the alkaline fluid; and
- at least one bipolar membrane (42i) separating the acidic chamber (50i2) and the alkaline chamber (50i1), the bipolar membrane (42i) enabling bipolar ion exchange between the acidic chamber (50i2) and the alkaline chamber (50i1);
b. at least one cathode compartment (114) comprising at least one cathode electrode (118), the cathode compartment (114) being separated from the fluidic stack (112) by at least one membrane enabling ion exchange between the cathode compartment (114) and the fluidic stack (112); and
c. at least one anode compartment (116) comprising at least one anode electrode (126), the anode compartment (116) being separated from the fluidic stack (112) by the at least one membrane enabling ion exchange between the anode compartment (116) and the fluidic stack (112),
wherein the electrodialysis device (110) is configured for rinsing both the cathode compartment (114) and the anode compartment (116) with at least one rinsing fluid comprising at least one of the acidic fluid and the alkaline fluid.

2. The electrodialysis device (110) according to the preceding claim, wherein the electrodialysis device (110) is configured for rinsing firstly the anode compartment (116) and secondly the cathode compartment (114).

3. The electrodialysis device (110) according to any one of the preceding claims, wherein both the cathode compartment (114) and the anode compartment (116) are connected to at least one electrode rinse fluid path (162), the electrode rinse fluid path (162) being configured for rinsing both the cathode compartment (114) and the anode compartment (116) with the at least one rinsing fluid, wherein the electrodialysis device (110) comprises at least one alkaline device outlet (140) fluidically connected to the alkaline outlet (512i1) and at least one acidic device outlet (136) fluidically connected to the acidic outlet (522i2)..

4. The electrodialysis device (110) according to the preceding claim, wherein the at least one electrode rinse fluid path (162) is at least one of at least partially fluidically interconnected between the alkaline outlet (512i1) and the alkaline device outlet (140); at least partially fluidically interconnected between the acidic outlet (522i2) and the acidic device outlet (136), wherein the electrode rinse fluid path (162) is fluidically connected to at least one of the acidic device outlet (136) and the alkaline device outlet (140).

5. The electrodialysis device (110) according to any one of the two preceding claims, wherein the electrodialysis device (110) is configured according to one of the following:
- the alkaline outlet (512i1) is fluidically connected to the electrode rinse fluid path (162) and the electrode rinse fluid path (162) is fluidically connected to the alkaline device outlet (140), such that the alkaline fluid generated by the alkaline chamber (50i1) at least partially flows through the alkaline outlet (512i1) into the electrode rinse fluid path (162), via the electrode rinse fluid path (162) through at least one of the cathode compartment (114) and the anode compartment (116), and through the alkaline device outlet (140);
- the acidic outlet (522i2) is fluidically connected to the electrode rinse fluid path (162) and the electrode rinse fluid path (162) is fluidically connected to the acidic device outlet (136), such that the acidic fluid generated by the acidic chamber (50i2) at least partially flows through the acidic outlet (522i2) into the electrode rinse fluid path (162), via the electrode rinse fluid path (162) through at least one of the cathode compartment (114) and the anode compartment (116), and through the acidic device outlet (136).

6. The electrodialysis device (110) according to any one of the three preceding claims, wherein the electrode rinse fluid path (162) is configured such that the anode compartment (116) and the cathode compartment (114) are sequentially rinsed with at least one rinsing fluid comprising at least one of the acidic fluid and the alkaline fluid.

7. The electrodialysis device (110) according to any one of the four preceding claims, wherein the electrode rinse fluid path (162) comprises at least one degassing device (164), wherein the electrode rinse fluid path (162) comprises at least one anode degassing device disposed in the electrode rinse fluid path (162) downstream the anode compartment (116) and at least one cathode degassing device disposed in the electrode rinse fluid path (162) downstream the cathode compartment (114).

8. The electrodialysis device (110) according to any one of the five preceding claims, wherein the electrodialysis device (110) comprises at least one alkaline fluid path, wherein the alkaline fluid path is the electrode rinse fluid path (162).

9. The electrodialysis device (110) according to any one of the six preceding claims, wherein the electrodialysis device (110) comprises at least one acidic fluid path, wherein the acidic fluid path is the electrode rinse fluid path (162).

10. The electrodialysis device (110) according to any one of the seven preceding claims, wherein the fluidic stack (112) further comprises at least one brine chamber, wherein the brine chamber comprises at least one brine chamber inlet for streaming fluid through the brine chamber, wherein the brine chamber further comprises at least one brine outlet for providing an aqueous medium comprising at least one salt, wherein the electrode rinse fluid path (162) is fluidically connected to at least one of the acidic device outlet (136), the alkaline device outlet (140) and the brine outlet.

11. A cleaning device (198) for cleaning items (202), comprising:
- at least one cleaning chamber (200) for receiving the items (202);
- at least one fluid application device (204) for applying at least one cleaning fluid to the items (202) received in the cleaning chamber (200); and
- at least one electrodialysis device (110) according to any one of the preceding claims,
wherein the cleaning device (198) is configured for feeding at least a part of at least one of the alkaline fluid and the acidic fluid prepared by the electrodialysis device (110) to the fluid application device (204).

12. The cleaning device (198) according to the preceding claim, wherein the cleaning device (198) is a dishwasher.

13. A method for preparing at least one alkaline fluid and at least one acidic fluid from an aqueous medium comprising at least one salt, the method comprising using the electrodialysis device (110) according to any one of the preceding claims referring to an electrodialysis device (110) for preparing the alkaline fluid and the acidic fluid, wherein the method comprises rinsing both the cathode compartment (114) and the anode compartment (116) with at least one rinsing fluid comprising at least one of the acidic fluid and the alkaline fluid.

14. A process of cleaning items (202), the process using the cleaning device (198) according to any one of the preceding claims referring to a cleaning device (198), the process comprising:
i. receiving the items (202) to be cleaned in the at least one cleaning chamber (200) of the cleaning device (198);
ii. preparing the at least one alkaline fluid and at least one acidic fluid by using the electrodialysis device (110) of the cleaning device (198); and
iii. feeding the at least one of the alkaline fluid and the acidic fluid to the at least one fluid application device (204) of the cleaning device (198); and
iv. applying at least one cleaning fluid to the items (202) received in the cleaning chamber (200) by using the at least one fluid application device (204) of the cleaning device (198).

15. The process of cleaning items according to the preceding claim, wherein in step ii. the at least one rinsing fluid is provided by the alkaline outlet (512i1) of the alkaline chamber (50i1) or by the acidic outlet (522i2) of the acidic chamber (50i2).

## Amended claims

### Amended claims in accordance with Rule 137(2) EPC.

1. An electrodialysis device (110) configured for preparing at least one alkaline fluid and at least one acidic fluid from an aqueous medium comprising at least one salt by using bipolar membrane electrodialysis, the electrodialysis device (110) comprising:
a. at least one fluidic stack (112) comprising:
- at least one acidic chamber (50i2) having at least one acidic outlet (522i2) for providing the acidic fluid;
- at least one alkaline chamber (50i1) having at least one alkaline outlet (512i1) for providing the alkaline fluid; and
- at least one bipolar membrane (42i) separating the acidic chamber (50i2) and the alkaline chamber (50i1), the bipolar membrane (42i) enabling bipolar ion exchange between the acidic chamber (50i2) and the alkaline chamber (50i1);
b. at least one cathode compartment (114) comprising at least one cathode electrode (118), the cathode compartment (114) being separated from the fluidic stack (112) by at least one membrane enabling ion exchange between the cathode compartment (114) and the fluidic stack (112); and
c. at least one anode compartment (116) comprising at least one anode electrode (126), the anode compartment (116) being separated from the fluidic stack (112) by the at least one membrane enabling ion exchange between the anode compartment (116) and the fluidic stack (112),
wherein the electrodialysis device (110) is configured for rinsing both the cathode compartment (114) and the anode compartment (116) with at least one rinsing fluid comprising at least one of the acidic fluid and the alkaline fluid, wherein the electrodialysis device (110) is configured for rinsing firstly the anode compartment (116) and secondly the cathode compartment (114).

2. The electrodialysis device (110) according to the preceding claim, wherein both the cathode compartment (114) and the anode compartment (116) are connected to at least one electrode rinse fluid path (162), the electrode rinse fluid path (162) being configured for rinsing both the cathode compartment (114) and the anode compartment (116) with the at least one rinsing fluid, wherein the electrodialysis device (110) comprises at least one alkaline device outlet (140) fluidically connected to the alkaline outlet (512i1) and at least one acidic device outlet (136) fluidically connected to the acidic outlet (522i2)..

3. The electrodialysis device (110) according to the preceding claim, wherein the at least one electrode rinse fluid path (162) is at least one of: at least partially fluidically interconnected between the alkaline outlet (512i1) and the alkaline device outlet (140); at least partially fluidically interconnected between the acidic outlet (522i2) and the acidic device outlet (136), wherein the electrode rinse fluid path (162) is fluidically connected to at least one of the acidic device outlet (136) and the alkaline device outlet (140).

4. The electrodialysis device (110) according to any one of the two preceding claims, wherein the electrodialysis device (110) is configured according to one of the following:
- the alkaline outlet (512i1) is fluidically connected to the electrode rinse fluid path (162) and the electrode rinse fluid path (162) is fluidically connected to the alkaline device outlet (140), such that the alkaline fluid generated by the alkaline chamber (50i1) at least partially flows through the alkaline outlet (51211) into the electrode rinse fluid path (162), via the electrode rinse fluid path (162) through at least one of the cathode compartment (114) and the anode compartment (116), and through the alkaline device outlet (140);
- the acidic outlet (522i2) is fluidically connected to the electrode rinse fluid path (162) and the electrode rinse fluid path (162) is fluidically connected to the acidic device outlet (136), such that the acidic fluid generated by the acidic chamber (50i2) at least partially flows through the acidic outlet (522i2) into the electrode rinse fluid path (162), via the electrode rinse fluid path (162) through at least one of the cathode compartment (114) and the anode compartment (116), and through the acidic device outlet (136).

5. The electrodialysis device (110) according to any one of the three preceding claims, wherein the electrode rinse fluid path (162) is configured such that the anode compartment (116) and the cathode compartment (114) are sequentially rinsed with at least one rinsing fluid comprising at least one of the acidic fluid and the alkaline fluid.

6. The electrodialysis device (110) according to any one of the four preceding claims, wherein the electrode rinse fluid path (162) comprises at least one degassing device (164), wherein the electrode rinse fluid path (162) comprises at least one anode degassing device disposed in the electrode rinse fluid path (162) downstream the anode compartment (116) and at least one cathode degassing device disposed in the electrode rinse fluid path (162) downstream the cathode compartment (114).

7. The electrodialysis device (110) according to any one of the five preceding claims, wherein the electrodialysis device (110) comprises at least one alkaline fluid path, wherein the alkaline fluid path is the electrode rinse fluid path (162).

8. The electrodialysis device (110) according to any one of the six preceding claims, wherein the electrodialysis device (110) comprises at least one acidic fluid path, wherein the acidic fluid path is the electrode rinse fluid path (162).

9. The electrodialysis device (110) according to any one of the seven preceding claims, wherein the fluidic stack (112) further comprises at least one brine chamber, wherein the brine chamber comprises at least one brine chamber inlet for streaming fluid through the brine chamber, wherein the brine chamber further comprises at least one brine outlet for providing an aqueous medium comprising at least one salt, wherein the electrode rinse fluid path (162) is fluidically connected to at least one of the acidic device outlet (136), the alkaline device outlet (140) and the brine outlet.

10. A cleaning device (198) for cleaning items (202), comprising:
- at least one cleaning chamber (200) for receiving the items (202);
- at least one fluid application device (204) for applying at least one cleaning fluid to the items (202) received in the cleaning chamber (200); and
- at least one electrodialysis device (110) according to any one of the preceding claims,
wherein the cleaning device (198) is configured for feeding at least a part of at least one of the alkaline fluid and the acidic fluid prepared by the electrodialysis device (110) to the fluid application device (204).

11. The cleaning device (198) according to the preceding claim, wherein the cleaning device (198) is a dishwasher.

12. A method for preparing at least one alkaline fluid and at least one acidic fluid from an aqueous medium comprising at least one salt, the method comprising using the electrodialysis device (110) according to any one of the preceding claims referring to an electrodialysis device (110) for preparing the alkaline fluid and the acidic fluid, wherein the method comprises rinsing both the cathode compartment (114) and the anode compartment (116) with at least one rinsing fluid comprising at least one of the acidic fluid and the alkaline fluid.

13. A process of cleaning items (202), the process using the cleaning device (198) according to any one of the preceding claims referring to a cleaning device (198), the process comprising:
i. receiving the items (202) to be cleaned in the at least one cleaning chamber (200) of the cleaning device (198);
ii. preparing the at least one alkaline fluid and at least one acidic fluid by using the electrodialysis device (110) of the cleaning device (198); and
iii. feeding the at least one of the alkaline fluid and the acidic fluid to the at least one fluid application device (204) of the cleaning device (198); and
iv. applying at least one cleaning fluid to the items (202) received in the cleaning chamber (200) by using the at least one fluid application device (204) of the cleaning device (198).

14. The process of cleaning items according to the preceding claim, wherein in step ii. the at least one rinsing fluid is provided by the alkaline outlet (512i1) of the alkaline chamber (50i1) or by the acidic outlet (522i2) of the acidic chamber (50i2).
